# EUROPEAN PATENT SPECIFICATION

(11) **EP 3 314 904 B1**
(45) Date of publication and mention of the grant of the patent: **03.05.2023**
(21) Application number: 16738935.2
(22) Date of filing: 24.06.2016
(51) Int. Cl.: H04N 21/482, H04N 21/458, H04N 21/44, H04N 21/845

(54) **METHODS AND APPARATUS FOR GENERATING FOR DISPLAY PORTIONS OF MEDIA ASSETS**
ANZEIGEN VON SZENEN VON MEDIA ASSETS
METHODE ET APPAREIL POUR AFFICHER DES SCENES DE CONTENUS MEDIA.

(30) Priority: 29.06.2015 US 201514754617
(43) Date of publication of application: 02.05.2018
(73) Proprietor: Rovi Guides, Inc., San Jose, CA 95002 (US)
(72) Inventor: SHAH, Sandip, San Jose, CA 95135 (US)
(74) Representative: Haley Guiliano International LLP
(86) International application number: PCT/US2016/039269
(87) International publication number: WO 2017/003867

(56) References cited:
- WO-A1-2008/075236
- WO-A1-2014/105001
- KR-A- 20100 058 124
- US-A1- 2005 198 670
- US-A1- 2010 037 268
- US-A1- 2012 093 476
- US-A1- 2014 133 828
- US-A1- 2015 113 571
- SCIENTIFIC ATLANTA: "Explorer Digital Video Recorder", USER'S GUIDE, , 31 October 2006 (2006-10-31), pages 1-48, XP007913105, Retrieved from the Internet: URL:http://www.cisco.com/web/consumer/supp ort/userguides2/4003870.pdf [retrieved on 2016-09-01]

## Description

### Background

In conventional systems, users have access to a plethora of media assets (e.g., television programs, movies, etc.). Despite the availability of media content, users may only wish to consume a specific portion of any one media asset, forcing the user to determine when (e.g., what date and time) and where (e.g., from which content provider) the specific portion of a media asset is available. To further complicate the issue, viewing times of media assets featuring specific portions of interest to the user may overlap. Thus, even after determining what to view and when, a user is forced to actively switch between various media assets in order to ensure that all portions are viewed. In addition to the inherent difficulty of such a task, actively switching between media assets is a stressful and tedious task, which negatively impacts the viewing experience of the user.

In U.S. Patent Application Publication No. 2014/0133828 A1, a scene switching system and method applicable to a plurality of media channels and a recording medium thereof are provided, which are used for switching and playing scenes for a plurality of media channels. Such a system includes a channel connection module and a media switching module. The channel connection module acquires first media data and second media data from a first media channel and a second media channel. The media switching module, when determining that a first switching setting corresponding to the first media data is set to be activated and the second media data is being played, analyzes whether a first playing scene of the first media data agrees with scene demand data of the first switching setting, and decides whether to perform switching processing on the first playing scene according to the first switching setting. U.S. Patent Application Publication No. 2015/0113571 A1 describes methods and apparatus for content switching in a content distribution network. In one example, an apparatus is configured to receive a user selection for content. The apparatus processes the content and outputs the content to a display. The apparatus also receives an input indicating a content switch, and switches to an alternate content located on a second apparatus. The apparatus transmits the secondary content to the second apparatus, while receiving the alternate content from the second apparatus.

### Summary

According to an aspect of the invention, there is provided one or more of a system according to claim 1, a method according to claim 4 and a computer program according to claim 7. Accordingly, methods and apparatus are disclosed herein for a media guidance application that automatically switches between portions of media assets of interest to a user. After determining what portions of the various media assets are of interest to the user, the media guidance application automatically monitors for triggers that indicate both when a portion of a media asset begins and, optionally, when the portion of the media asset ends. Based on these triggers, the media guidance application may switch between various media assets to ensure that the user views all portions of media assets that are of interest. Advantageously, the user is relieved of the burden of manually monitoring for, and switching between, different portions of interest. Thus, the viewing experience of the user is improved.

In this manner, a media guidance application implemented on a user equipment device replaces a first scene of a first media asset with a second scene of a second media asset based on determining that a first point in time corresponds to a start time of the second scene, while the first media asset is displayed. By replacing the first scene with the second scene based on determining that a first point in time corresponds to a start time of the second scene, the media guidance application can transition between the media assets without user input during viewing of the first media asset.

By way of the methods and apparatus disclosed herein, control circuitry of a user equipment device generates for display on a display screen a first scene of a first media asset (e.g., a scheduled media asset such as the broadcast program "Dr. Phil"). For example, control circuitry may receive a user selection of the first media asset (e.g., "Dr. Phil") from a media guidance application, and based on the response, generate a first scene of the media asset for display on a display screen.

The control circuitry receives a request to access a second scene of a second media asset (e.g., a scene about the "Final Round" from another scheduled media asset such as the broadcast program "Miss USA"). For example, control circuitry of a user equipment may receive a request to access a second scene based on a user selection, via an input device, of a second scene of a second media asset from a media guidance application display (e.g., a user selection of an identifier of a "Final Round" scene from the media asset "Miss USA"). For example, control circuitry of a server may receive a request to access a second scene of a second media asset, from a user equipment at which a user selection of the second scene of the second media asset was received via an input device.

Without receiving further user inputs, the control circuitry determines that a first point in time corresponds to a start time of the second scene while the first media asset is generated for display. For example, control circuitry of a user equipment device may receive (e.g., as part of media guidance for the second media asset) a start time and an end time of a second scene of a second media asset (e.g., the "Final Round" scene of "Miss USA"), or may receive the start time and a duration of the second scene. For example, the control circuitry may determine that the second scene about the "Final Round" from "Miss USA" begins at 9:45 PM, and a current time of generation for display of the first media asset "Dr. Phil" corresponds to the 9:45 PM time.

Without receiving further user inputs, based on determining that the first point in time corresponds to the start time, control circuitry replaces the first scene of the first media asset with the second scene on the display screen. For example, control circuitry of a user equipment may replace the first 10 scene of "Dr. Phil" with the second scene about "Final Round" from "Miss USA."

Without receiving further user inputs, control circuitry may determine that a second point in time corresponds to an end time of the second scene while the second scene is generated for display. For example, control circuitry may determine that an end time of the "Final Round" scene is 9:55 PM and that a current time of 9:55 PM corresponds to the end time of the "Final Round" scene.

Without receiving further user inputs, control circuitry may replace the second scene with the first media asset on the display screen based on determining that the second point in time corresponds to the end time. For example, based on the determining that the current time of 9:55 PM corresponds to the end time of the "Final Round" scene, control circuitry may replace the "Final Round" second scene of "Miss USA" with the first media asset "Dr. Phil."

In some embodiments, control circuitry may determine a time period at which the second scene will be generated for display, where the time period includes the start time and end time based on data transmitted with the second media asset. For example, control circuitry of a user equipment device may receive a start time and an end time, or a start time and a duration of a scene, as part of metadata in media guidance data for the second media asset. Control circuitry may receive start time and end time information, or start time and duration information for a plurality of scenes of a media asset as part of metadata in media guidance data for the second media asset. For example, control circuitry may receive start time and end time information for a number of scenes such as a "Talent Competition" scene and a "Final Round" scene for a scheduled media asset "Miss USA" when receiving media guidance data for the media asset "Miss USA."

In another example, control circuitry may cross-reference the second scene with a database including time periods that correspond to scenes of media assets to determine a time period at which the second scene will be generated for display. For example, control circuitry of a user equipment may receive a number of scene identifiers as part of metadata in media guidance data for the second media asset. For example, control circuitry may receive a number of identifiers for the "Talent Competition" scene and the "Final Round Scene" of the media asset "Miss USA." Based on this received media guidance data, control circuitry may generate for display identifiers for each of the scenes. Based on a selection of a second scene for playback, control circuitry may cross-reference the selected second scene with a database including time periods that correspond to scenes of media assets to determine a time period (e.g., 9:45 PM to 9:55 PM for the "Final Round" scene) at which a second scene will be generated for display.

In some embodiments, control circuitry may determine a first playback position in a first media asset that corresponds to the first point in time, and determine to replace the first scene with the second scene based on a current playback position in the first media asset corresponding to the first playback position. For example, control circuitry may determine that a playback position in the first media asset for "Dr. Phil" corresponds to the 9:45 PM start time for the "Final Round" second scene in the "Miss USA" media asset. Control circuitry may determine to replace a first scene from "Dr. Phil" that is generated for display with the second scene based on a current playback position corresponding to the first playback position.

In some embodiments, the media guidance application may monitor how long a scene has been presented in order to accurately switch between media assets. For example, control circuitry may determine a length of time of the second scene, initiate a countdown corresponding to the length of time based on replacing the first scene with the second scene on the display screen, and determine to replace the second scene with the first media asset on the display screen based on the countdown expiring. For example, control circuitry may determine a duration of a selected second scene based on received metadata of media guidance data for the scene (e.g., by determining a difference between an end time and start time for a scene or by retrieving a received duration of a scene). Control circuitry may initiate a countdown (e.g., a 10-minute countdown for the "Final Round" second scene of the second media asset "Miss USA") corresponding to the length of the second scene. For example, control circuitry may initiate the countdown upon replacing the display of a first scene of a first media asset with a second scene of a second media asset. Control circuitry may determine to replace the second scene (e.g., "Final Round" of "Miss USA"), upon expiration of the countdown (e.g., 10-minute countdown for the "Final Round" scene expiring), with the first media asset (e.g., "Dr. Phil").

The media guidance application uses audio cues in the first media asset to determine when to switch to the second scene of the second media asset. Control circuitry determines a first audio cue in the first media asset that corresponds to the first point in time, and determines to replace the first scene with the second scene on the display screen based on a current audio cue in the first media asset corresponding to the first audio cue. For example, in order to provide a seamless and less disruptive viewing experience to a viewer, control circuitry determines to transition based on audio cues in the first media asset (e.g., minimum periods of silence in speech, or keywords that may be associated with the second scene of the second media asset). For example, control circuitry may determine that an audio cue such as a minimum period of low audio activity has occurred in the first media asset "Dr. Phil," and that the audio cue is within a 10-second temporal window around the start time of the "Final Round" second scene of "Miss USA." Based on this determination, control circuitry may replace the display of "Dr. Phil" with a display of the "Final Round" scene of "Miss USA." Control circuitry may determine that a keyword "competition" or related keywords has been detected as an audio cue in the first media asset within a 10-second temporal window around the start time of the "Final Round" scene and of "Miss USA" and replace the display of "Dr. Phil" with a display of the "Final Round" scene of "Miss USA."

In another example, the media guidance application may use tags in the first media asset to determine when to switch to the second scene of the second media asset. For example, control circuitry may determine a first tag in the first media asset corresponds to the first point in time, and determine to replace the first scene with the second scene on the display screen based on detecting the first tag in the first media asset. For example, control circuitry may receive tags in metadata as part of the first media asset identifying pre-determined transition points, corresponding to frames of video, within the first media asset when transitions to a second scene of the second media asset may take place. For example, control circuitry may receive the tags as predetermined transition points, and identify a frame of video that is close in temporal proximity to a start time of the second scene of the second media asset.

In some embodiments, the media guidance application may store one or more portions of a media asset to allow the user to view the portions at a later time. For example, the media guidance application may determine that two scenes of interest to the user occur at the same time. Accordingly, the media guidance application may record one of those scenes to allow the user to view the scene at a later time. For example, control circuitry may pause playback of the first scene at the first point in time, and resume playback of the first scene at the second point in time. For example, control circuitry may store the first scene of the first media asset "Dr. Phil" while the "Final Round" second scene is played back, and, upon completion of playback of the "Final Round" scene, resume playback of the first scene of "Dr. Phil" based on the stored version of "Dr. Phil."

In some embodiments, the media guidance application may switch between scenes of different media assets using various display schemes. For example, control circuitry may generate the first scene for display in a first Internet browser tab and generate the second scene for display on a second Internet browser tab. For example, control circuitry of a user equipment device may generate for display the first media asset "Dr. Phil" in a first Internet browser tab. Control circuitry may determine that the first point in time corresponds to a start time of the "Final Round" scene and generate for display the "Final Round" scene in a second Internet browser tab.

It should be noted, the systems and/or methods described above may be combined with, applied to, or used in accordance with, other systems, methods and/or apparatuses discussed both above and below.

### Brief Description of the Drawings

The above and other objects and advantages of the disclosure will be apparent upon consideration of the following detailed description, taken in conjunction with the accompanying drawings, in which like reference characters refer to like parts throughout, and in which:
FIG. 1 shows an illustrative media guidance application for selecting media assets in accordance with some embodiments of the disclosure;
FIG. 2 shows an illustrative media guidance application that may be used to adjust user settings in accordance with some embodiments of the disclosure;
FIG. 3 is a block diagram of an illustrative media system in accordance with some embodiments of the disclosure;
FIG. 4 is a block diagram of an illustrative media system in accordance with some embodiments of the disclosure;
FIG. 5 shows a timing diagram for transitioning between scenes of interest in an illustrative media system in accordance with some embodiments of the disclosure;
FIG. 6 shows an illustrative display that can be generated for display to a user while viewing and transitioning between scenes of interest in an illustrative media system in accordance with some embodiments of the disclosure;
FIG. 7 shows an illustrative display that can be generated for display to a user in an Internet browser while viewing and transitioning between scenes of interest in an illustrative media system in accordance with some embodiments of the disclosure; and
FIG. 8 is a flowchart of illustrative steps involved in transitioning between scenes of interest in accordance with some embodiments of the disclosure.

### Detailed Description

Methods and apparatus are disclosed herein for replacing a first scene of a first media asset with a second scene of a second media asset based on determining that a first point in time corresponds to a start time of the second scene, while the first media asset is displayed. By replacing the first scene with the second scene based on determining that a first point in time corresponds to a start time of the second scene, the transition is performed by control circuitry of a user equipment automatically, without user input during viewing of the first media asset.

By way of the methods and apparatus disclosed herein, control circuitry of a user equipment device generates for display on a display screen a first scene of a first media asset (e.g., a scheduled media asset such as a broadcast program, or an unscheduled media asset such as on-demand program "Bubble Guppies"). The control circuitry receives a request to access a second scene of a second media asset (e.g., a scene about the "Talent Competition" from another scheduled media asset such as the broadcast program "Miss USA," or a scene about camping from another unscheduled media asset "Daniel the Tiger"). Without receiving further user inputs, the control circuitry determines that a first point in time corresponds to a start time of the second scene while the first media asset is generated for display. For example, the control circuitry may determine that the second scene about the "Talent Competition" from "Miss USA" begins at 9:20 PM, and a current time of generation for display of a first media asset (e.g., an on-demand media asset "Bubble Guppies") corresponds to the 9:20 PM time. Based on the determining that the first point in time corresponds to the start time, control circuitry may pause playback of the first media asset "Bubble Guppies" and replaces the first scene of "Bubble Guppies" with the second scene about "Talent Competition" from "Miss USA." Control circuitry may determine that a second point in time corresponds to an end time of the second scene while the second scene is generated for display. For example, control circuitry may determine that an end time of the "Talent Competition" scene is 9:40 PM and that a current time of 9:40 PM corresponds to the end time of the "Talent Competition" scene. Based on the determining that the current time of 9:40 PM corresponds to the end time of the "Talent Competition" scene, control circuitry may replace the "Talent Competition" second scene of "Miss USA" with the first media asset "Bubble Guppies" and resume playback of Bubble Guppies from the pause point.

Methods and apparatus are disclosed herein for replacing a first scene of a first media asset with a second scene of a second media asset, based on determining that a first point in time corresponds to a start time of the second scene. The amount of content available to users in any given content delivery system can be substantial. Consequently, many users desire a form of media guidance through an interface that allows users to efficiently navigate content selections and easily identify content that they may desire. An application that provides such guidance is referred to herein as an interactive media guidance application or, sometimes, a media guidance application or a guidance application.

Interactive media guidance applications may take various forms depending on the content for which they provide guidance. One typical type of media guidance application is an interactive television program guide. Interactive television program guides (sometimes referred to as electronic program guides) are well-known guidance applications that, among other things, allow users to navigate among and locate many types of content or media assets. Interactive media guidance applications may generate graphical user interface screens that enable a user to navigate among, locate and select content.

As referred to herein, the terms "media asset" and "content" should be understood to mean an electronically consumable user asset, such as television programming, as well as pay-per-view programs, on-demand programs (as in video-on-demand (VOD) systems), Internet content (e.g., streaming content, downloadable content, Webcasts, etc.), video clips, audio, content information, pictures, rotating images, documents, playlists, websites, articles, books, electronic books, blogs, advertisements, chat sessions, social media, applications, games, and/or any other media or multimedia and/or combination of the same. Guidance applications also allow users to navigate among and locate content. As referred to herein, the term "multimedia" should be understood to mean content that utilizes at least two different content forms described above, for example, text, audio, images, video, or interactivity content forms. Content may be recorded, played, displayed or accessed by user equipment devices, but can also be part of a live performance.

The media guidance application and/or any instructions for performing any of the embodiments discussed herein may be encoded on computer readable media. Computer readable media includes any media capable of storing data. The computer readable media may be transitory, including, but not limited to, propagating electrical or electromagnetic signals, or may be non-transitory including, but not limited to, volatile and non-volatile computer memory or storage devices such as a hard disk, floppy disk, USB drive, DVD, CD, media cards, register memory, processor caches, Random Access Memory ("RAM"), etc.

With the advent of the Internet, mobile computing, and high-speed wireless networks, users are accessing media on user equipment devices on which they traditionally did not. As referred to herein, the phrase "user equipment device," "user equipment," "user device," "electronic device," "electronic equipment," "media equipment device," or "media device" should be understood to mean any device for accessing the content described above, such as a television, a Smart TV, a set-top box, an integrated receiver decoder (IRD) for handling satellite television, a digital storage device, a digital media receiver (DMR), a digital media adapter (DMA), a streaming media device, a DVD player, a DVD recorder, a connected DVD, a local media server, a BLU-RAY player, a BLU-RAY recorder, a personal computer (PC), a laptop computer, a tablet computer, a WebTV box, a personal computer television (PC/TV), a PC media server, a PC media center, a hand-held computer, a stationary telephone, a personal digital assistant (PDA), a mobile telephone, a portable video player, a portable music player, a portable gaming machine, a smart phone, or any other television equipment, computing equipment, or wireless device, and/or combination of the same. In some embodiments, the user equipment device may have a front facing screen and a rear facing screen, multiple front screens, or multiple angled screens. In some embodiments, the user equipment device may have a front facing camera and/or a rear facing camera. On these user equipment devices, users may be able to navigate among and locate the same content available through a television. Consequently, media guidance may be available on these devices, as well. The guidance provided may be for content available only through a television, for content available only through one or more of other types of user equipment devices, or for content available both through a television and one or more of the other types of user equipment devices. The media guidance applications may be provided as on-line applications (i.e., provided on a web-site), or as stand-alone applications or clients on user equipment devices. Various devices and platforms that may implement media guidance applications are described in more detail below.

One of the functions of the media guidance application is to provide media guidance data to users. As referred to herein, the phrase "media guidance data" or "guidance data" should be understood to mean any data related to content or data used in operating the guidance application. For example, the guidance data may include program information, guidance application settings, user preferences, user profile information, media listings, media-related information (e.g., broadcast times, broadcast channels, titles, descriptions, ratings information (e.g., parental control ratings, critic's ratings, etc.), genre or category information, actor information, logo data for broadcasters' or providers' logos, etc.), media format (e.g., standard definition, high definition, 3D, etc.), advertisement information (e.g., text, images, media clips, etc.), on-demand information, blogs, websites, and any other type of guidance data that is helpful for a user to navigate among and locate desired content selections.

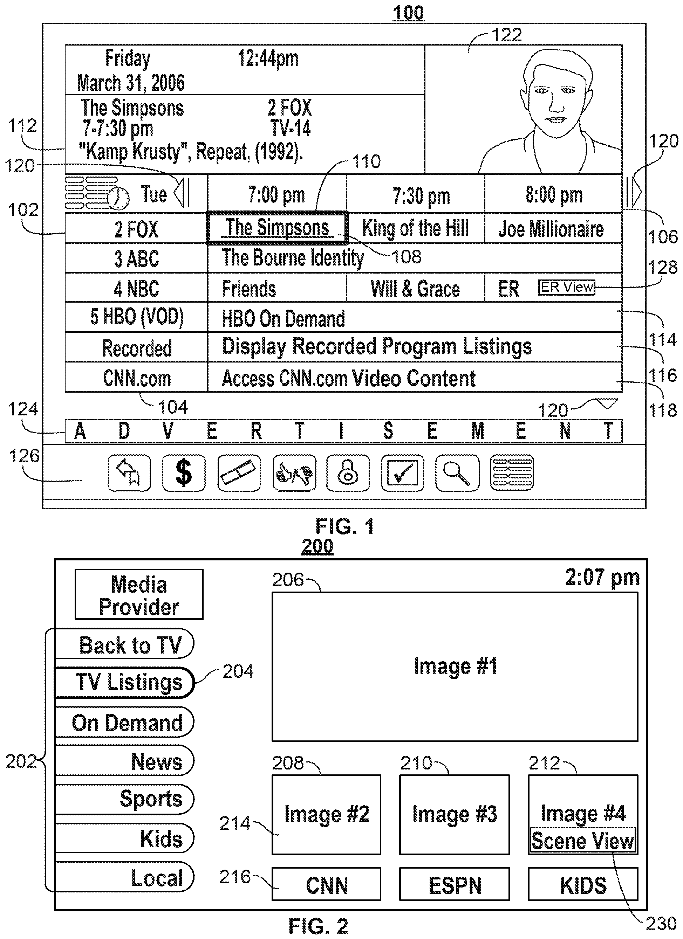

FIGS. 1-2 show illustrative display screens that may be used to provide media guidance data. For example, the media guidance application may receive selections of scenes of media assets of interest to a user via the display screens of FIGS. 1-2. The display screens shown in FIGS. 1-2 may be implemented on any suitable user equipment device or platform. While the displays of FIGS. 1-2 are illustrated as full screen displays, they may also be fully or partially overlaid over content being displayed. A user may indicate a desire to access content information by selecting a selectable option provided in a display screen (e.g., a menu option, a listings option, an icon, a hyperlink, etc.) or pressing a dedicated button (e.g., a GUIDE button) on a remote control or other user input interface or device. In response to the user's indication, the media guidance application may provide a display screen with media guidance data organized in one of several ways, such as by time and channel in a grid, by time, by channel, by source, by content type, by category (e.g., movies, sports, news, children, or other categories of programming), or other predefined, user-defined, or other organization criteria.

FIG. 1 shows illustrative grid of a program listings display 100 arranged by time and channel that also enables access to different types of content in a single display. Display 100 may include grid 102 with: (1) a column of channel/content type identifiers 104, where each channel/content type identifier (which is a cell in the column) identifies a different channel or content type available; and (2) a row of time identifiers 106, where each time identifier (which is a cell in the row) identifies a time block of programming. Grid 102 also includes cells of program listings, such as program listing 108, where each listing provides the title of the program provided on the listing's associated channel and time. With a user input device, a user can select program listings by moving highlight region 110. Information relating to the program listing selected by highlight region 110 may be provided in program information region 112. Region 112 may include, for example, the program title, the program description, the time the program is provided (if applicable), the channel the program is on (if applicable), the program's rating, and other desired information.

In some embodiments, a program listing may include an indicator of scenes that may be selected for transitioned playback. For example, the program listing for ER includes an indicator 128 that indicates scenes may be selected from the program "ER" for automatic display during the scheduled broadcast of ER. For example, after receiving a selection of a scene from the program "ER," and while the program "Joe Millionaire" is displayed, the control circuitry may replace a display of "Joe Millionaire" with the selected scene from "ER" based on determining that the a current time corresponds to the start time of the selected scene. Based on determining that a current time corresponds to the end time of the selected scene from "ER," control circuitry may replace the display of the selected scene from "ER" with the program "Joe Millionaire."

In addition to providing access to linear programming (e.g., content that is scheduled to be transmitted to a plurality of user equipment devices at a predetermined time and is provided according to a schedule), the media guidance application also provides access to non-linear programming (e.g., content accessible to a user equipment device at any time and is not provided according to a schedule). Non-linear programming may include content from different content sources including on-demand content (e.g., VOD), Internet content (e.g., streaming media, downloadable media, etc.), locally stored content (e.g., content stored on any user equipment device described above or other storage device), or other time-independent content. On-demand content may include movies or any other content provided by a particular content provider (e.g., HBO On Demand providing "The Sopranos" and "Curb Your Enthusiasm"). HBO ON DEMAND is a service mark owned by Time Warner Company L.P. et al. and THE SOPRANOS and CURB YOUR ENTHUSIASM are trademarks owned by the Home Box Office, Inc. Internet content may include web events, such as a chat session or Webcast, or content available on-demand as streaming content or downloadable content through an Internet web site or other Internet access (e.g. FTP).

Grid 102 may provide media guidance data for non-linear programming including on-demand listing 114, recorded content listing 116, and Internet content listing 118. A display combining media guidance data for content from different types of content sources is sometimes referred to as a "mixed-media" display. Various permutations of the types of media guidance data that may be displayed that are different than display 100 may be based on user selection or guidance application definition (e.g., a display of only recorded and broadcast listings, only on-demand and broadcast listings, etc.). As illustrated, listings 114, 116, and 118 are shown as spanning the entire time block displayed in grid 102 to indicate that selection of these listings may provide access to a display dedicated to on-demand listings, recorded listings, or Internet listings, respectively. In some embodiments, listings for these content types may be included directly in grid 102. Additional media guidance data may be displayed in response to the user selecting one of the navigational icons 120. (Pressing an arrow key on a user input device may affect the display in a similar manner as selecting navigational icons 120.)

Display 100 may also include video region 122, advertisement 124, and options region 126. Video region 122 may allow the user to view and/or preview programs that are currently available, will be available, or were available to the user. The content of video region 122 may correspond to, or be independent from, one of the listings displayed in grid 102. Grid displays including a video region are sometimes referred to as picture-in-guide (PIG) displays. PIG displays and their functionalities are described in greater detail in Satterfield et al. U.S. Patent No. 6,564,378, issued May 13, 2003 and Yuen et al. U.S. Patent No. 6,239,794, issued May 29, 2001.

Advertisement 124 may provide an advertisement for content that, depending on a viewer's access rights (e.g., for subscription programming), is currently available for viewing, will be available for viewing in the future, or may never become available for viewing, and may correspond to or be unrelated to one or more of the content listings in grid 102. Advertisement 124 may also be for products or services related or unrelated to the content displayed in grid 102. Advertisement 124 may be selectable and provide further information about content, provide information about a product or a service, enable purchasing of content, a product, or a service, provide content relating to the advertisement, etc. Advertisement 124 may be targeted based on a user's profile/preferences, monitored user activity, the type of display provided, or on other suitable targeted advertisement bases.

While advertisement 124 is shown as rectangular or banner shaped, advertisements may be provided in any suitable size, shape, and location in a guidance application display. For example, advertisement 124 may be provided as a rectangular shape that is horizontally adjacent to grid 102. This is sometimes referred to as a panel advertisement. In addition, advertisements may be overlaid over content or a guidance application display or embedded within a display. Advertisements may also include text, images, rotating images, video clips, or other types of content described above. Advertisements may be stored in a user equipment device having a guidance application, in a database connected to the user equipment, in a remote location (including streaming media servers), or on other storage means, or a combination of these locations. Providing advertisements in a media guidance application is discussed in greater detail in, for example, Knudson et al., U.S. Patent Application Publication No. 2003/0110499, filed January 17, 2003; Ward, III et al. U.S. Patent No. 6,756,997, issued June 29, 2004; and Schein et al. U.S. Patent No. 6,388,714, issued May 14, 2002. It will be appreciated that advertisements may be included in other media guidance application display screens of the embodiments described herein.

Options region 126 may allow the user to access different types of content, media guidance application displays, and/or media guidance application features. Options region 126 may be part of display 100 (and other display screens described herein), or may be invoked by a user by selecting an on-screen option or pressing a dedicated or assignable button on a user input device. The selectable options within options region 126 may concern features related to program listings in grid 102 or may include options available from a main menu display. Features related to program listings may include searching for other air times or ways of receiving a program, recording a program, enabling series recording of a program, setting program and/or channel as a favorite, purchasing a program, or other features. Options available from a main menu display may include search options, VOD options, parental control options, Internet options, cloud-based options, device synchronization options, second screen device options, options to access various types of media guidance data displays, options to subscribe to a premium service, options to edit a user's profile, options to access a browse overlay, or other options.

The media guidance application may be personalized based on a user's preferences. A personalized media guidance application allows a user to customize displays and features to create a personalized "experience" with the media guidance application. This personalized experience may be created by allowing a user to input these customizations and/or by the media guidance application monitoring user activity to determine various user preferences. Users may access their personalized guidance application by logging in or otherwise identifying themselves to the guidance application. Customization of the media guidance application may be made in accordance with a user profile. The customizations may include varying presentation schemes (e.g., color scheme of displays, font size of text, etc.), aspects of content listings displayed (e.g., only HDTV or only 3D programming, user-specified broadcast channels based on favorite channel selections, re-ordering the display of channels, recommended content, etc.), desired recording features (e.g., recording or series recordings for particular users, recording quality, etc.), parental control settings, customized presentation of Internet content (e.g., presentation of social media content, e-mail, electronically delivered articles, etc.) and other desired customizations.

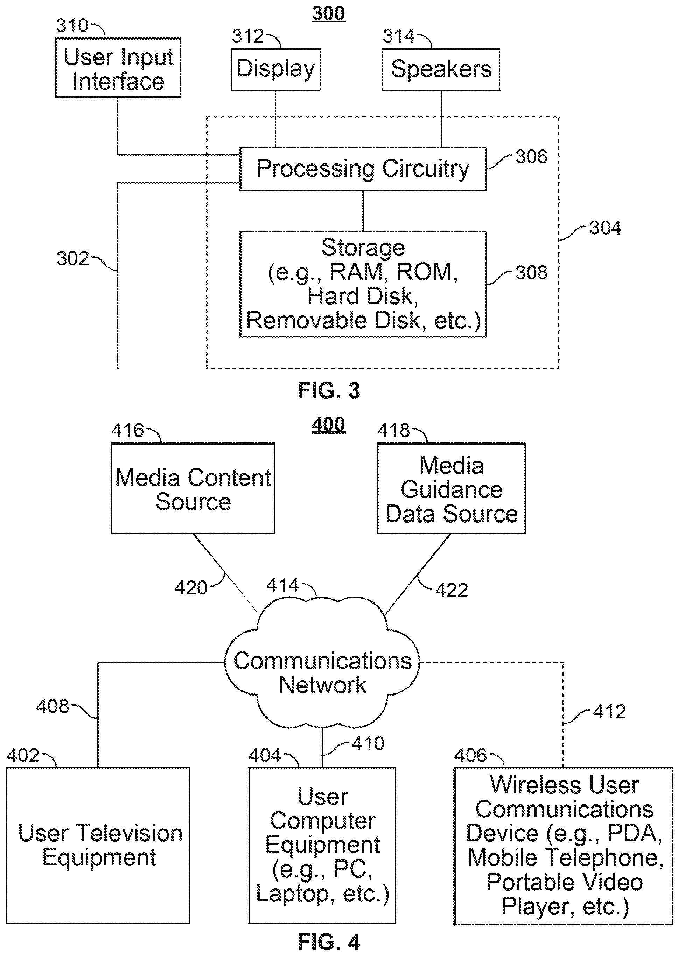

The media guidance application may allow a user to provide user profile information or may automatically compile user profile information. The media guidance application may, for example, monitor the content the user accesses and/or other interactions the user may have with the guidance application. Additionally, the media guidance application may obtain all or part of other user profiles that are related to a particular user (e.g., from other web sites on the Internet the user accesses, such as www.allrovi.com, from other media guidance applications the user accesses, from other interactive applications the user accesses, from another user equipment device of the user, etc.), and/or obtain information about the user from other sources that the media guidance application may access. As a result, a user can be provided with a unified guidance application experience across the user's different user equipment devices. This type of user experience is described in greater detail below in connection with FIG. 4. Additional personalized media guidance application features are described in greater detail in Ellis et al., U.S. Patent Application Publication No. 2005/0251827, filed July 11, 2005, Boyer et al., U.S. Patent No. 7,165,098, issued January 16, 2007, and Ellis et al., U.S. Patent Application Publication No. 2002/0174430, filed February 21, 2002.

Another display arrangement for providing media guidance is shown in FIG. 2. Video mosaic display 200 includes selectable options 202 for content information organized based on content type, genre, and/or other organization criteria. In display 200, television listings option 204 is selected, thus providing listings 206, 208, 210, and 212 as broadcast program listings. In display 200 the listings may provide graphical images including cover art, still images from the content, video clip previews, live video from the content, or other types of content that indicate to a user the content being described by the media guidance data in the listing. Each of the graphical listings may also be accompanied by text to provide further information about the content associated with the listing. For example, listing 208 may include more than one portion, including media portion 214 and text portion 216. Media portion 214 and/or text portion 216 may be selectable to view content in full-screen or to view information related to the content displayed in media portion 214 (e.g., to view listings for the channel that the video is displayed on).

The listings in display 200 are of different sizes (i.e., listing 206 is larger than listings 208, 210, and 212), but if desired, all the listings may be the same size. Listings may be of different sizes or graphically accentuated to indicate degrees of interest to the user or to emphasize certain content, as desired by the content provider or based on user preferences. Various systems and methods for graphically accentuating content listings are discussed in, for example, Yates, U.S. Patent Application Publication No. 2010/0153885, filed November 12, 2009. . In some embodiments, listing 212 may include an indicator 230, which indicates that scenes may be selected from a program corresponding to listing 212, similar to the indicator 128 discussed in reference to FIG. 1.

Users may access content and the media guidance application (and its display screens described above and below) from one or more of their user equipment devices. FIG. 3 shows a generalized embodiment of illustrative user equipment device 300. More specific implementations of user equipment devices are discussed below in connection with FIG. 4. User equipment device 300 may receive content and data via input/output (hereinafter "I/O") path 302. I/O path 302 may provide content (e.g., broadcast programming, on-demand programming, Internet content, content available over a local area network (LAN) or wide area network (WAN), and/or other content) and data to control circuitry 304, which includes processing circuitry 306 and storage 308. Control circuitry 304 may be used to send and receive commands, requests, and other suitable data using I/O path 302. I/O path 302 may connect control circuitry 304 (and specifically processing circuitry 306) to one or more communications paths (described below). I/O functions may be provided by one or more of these communications paths, but are shown as a single path in FIG. 3 to avoid overcomplicating the drawing.

Control circuitry 304 may be based on any suitable processing circuitry such as processing circuitry 306. As referred to herein, processing circuitry should be understood to mean circuitry based on one or more microprocessors, microcontrollers, digital signal processors, programmable logic devices, field-programmable gate arrays (FPGAs), application-specific integrated circuits (ASICs), etc., and may include a multi-core processor (e.g., dual-core, quadcore, hexa-core, or any suitable number of cores) or supercomputer. In some embodiments, processing circuitry may be distributed across multiple separate processors or processing units, for example, multiple of the same type of processing units (e.g., two Intel Core i7 processors) or multiple different processors (e.g., an Intel Core i5 processor and an Intel Core i7 processor). In some embodiments, control circuitry 304 executes instructions for a media guidance application stored in memory (i.e., storage 308). Specifically, control circuitry 304 may be instructed by the media guidance application to perform the functions discussed above and below. For example, the media guidance application may provide instructions to control circuitry 304 to generate the media guidance displays. In some implementations, any action performed by control circuitry 304 may be based on instructions received from the media guidance application.

In client-server based embodiments, control circuitry 304 may include communications circuitry suitable for communicating with a guidance application server or other networks or servers. The instructions for carrying out the above mentioned functionality may be stored on the guidance application server. Communications circuitry may include a cable modem, an integrated services digital network (ISDN) modem, a digital subscriber line (DSL) modem, a telephone modem, Ethernet card, or a wireless modem for communications with other equipment, or any other suitable communications circuitry. Such communications may involve the Internet or any other suitable communications networks or paths (which is described in more detail in connection with FIG. 4). In addition, communications circuitry may include circuitry that enables peer-to-peer communication of user equipment devices, or communication of user equipment devices in locations remote from each other (described in more detail below).

Memory may be an electronic storage device provided as storage 308 that is part of control circuitry 304. As referred to herein, the phrase "electronic storage device" or "storage device" should be understood to mean any device for storing electronic data, computer software, or firmware, such as random-access memory, read-only memory, hard drives, optical drives, digital video disc (DVD) recorders, compact disc (CD) recorders, BLU-RAY disc (BD) recorders, BLU-RAY 3D disc recorders, digital video recorders (DVR, sometimes called a personal video recorder, or PVR), solid state devices, quantum storage devices, gaming consoles, gaming media, or any other suitable fixed or removable storage devices, and/or any combination of the same. Storage 308 may be used to store various types of content described herein as well as media guidance data described above. Nonvolatile memory may also be used (e.g., to launch a boot-up routine and other instructions). Cloud-based storage, described in relation to FIG. 4, may be used to supplement storage 308 or instead of storage 308.

Control circuitry 304 may include video generating circuitry and tuning circuitry, such as one or more analog tuners, one or more MPEG-2 decoders or other digital decoding circuitry, high-definition tuners, or any other suitable tuning or video circuits or combinations of such circuits. Encoding circuitry (e.g., for converting over-the-air, analog, or digital signals to MPEG signals for storage) may also be provided. Control circuitry 304 may also include scaler circuitry for upconverting and downconverting content into the preferred output format of the user equipment 300. Circuitry 304 may also include digital-to-analog converter circuitry and analog-to-digital converter circuitry for converting between digital and analog signals. The tuning and encoding circuitry may be used by the user equipment device to receive and to display, to play, or to record content. The tuning and encoding circuitry may also be used to receive guidance data. The circuitry described herein, including for example, the tuning, video generating, encoding, decoding, encrypting, decrypting, scaler, and analog/digital circuitry, may be implemented using software running on one or more general purpose or specialized processors. Multiple tuners may be provided to handle simultaneous tuning functions (e.g., watch and record functions, picture-in-picture (PIP) functions, multiple-tuner recording, etc.). If storage 308 is provided as a separate device from user equipment 300, the tuning and encoding circuitry (including multiple tuners) may be associated with storage 308.

A user may send instructions to control circuitry 304 using user input interface 310. User input interface 310 may be any suitable user interface, such as a remote control, mouse, trackball, keypad, keyboard, touch screen, touchpad, stylus input, joystick, voice recognition interface, or other user input interfaces. Display 312 may be provided as a stand-alone device or integrated with other elements of user equipment device 300. For example, display 312 may be a touchscreen or touch-sensitive display. In such circumstances, user input interface 310 may be integrated with or combined with display 312. Display 312 may be one or more of a monitor, a television, a liquid crystal display (LCD) for a mobile device, amorphous silicon display, low temperature poly silicon display, electronic ink display, electrophoretic display, active matrix display, electro-wetting display, electrofluidic display, cathode ray tube display, light-emitting diode display, electroluminescent display, plasma display panel, high-performance addressing display, thin-film transistor display, organic light-emitting diode display, surface-conduction electron-emitter display (SED), laser television, carbon nanotubes, quantum dot display, interferometric modulator display, or any other suitable equipment for displaying visual images. In some embodiments, display 312 may be HDTV-capable. In some embodiments, display 312 may be a 3D display, and the interactive media guidance application and any suitable content may be displayed in 3D. A video card or graphics card may generate the output to the display 312. The video card may offer various functions such as accelerated rendering of 3D scenes and 2D graphics, MPEG-2/MPEG-4 decoding, TV output, or the ability to connect multiple monitors. The video card may be any processing circuitry described above in relation to control circuitry 304. The video card may be integrated with the control circuitry 304. Speakers 314 may be provided as integrated with other elements of user equipment device 300 or may be stand-alone units. The audio component of videos and other content displayed on display 312 may be played through speakers 314. In some embodiments, the audio may be distributed to a receiver (not shown), which processes and outputs the audio via speakers 314.

The guidance application may be implemented using any suitable architecture. For example, it may be a stand-alone application wholly-implemented on user equipment device 300. In such an approach, instructions of the application are stored locally (e.g., in storage 308), and data for use by the application is downloaded on a periodic basis (e.g., from an out-of-band feed, from an Internet resource, or using another suitable approach). Control circuitry 304 may retrieve instructions of the application from storage 308 and process the instructions to generate any of the displays discussed herein. Based on the processed instructions, control circuitry 304 may determine what action to perform when input is received from input interface 310. For example, movement of a cursor on a display up/down may be indicated by the processed instructions when input interface 310 indicates that an up/down button was selected.

In some embodiments, the media guidance application is a client-server based application. Data for use by a thick or thin client implemented on user equipment device 300 is retrieved on-demand by issuing requests to a server remote to the user equipment device 300. In one example of a client-server based guidance application, control circuitry 304 runs a web browser that interprets web pages provided by a remote server. For example, the remote server may store the instructions for the application in a storage device. The remote server may process the stored instructions using circuitry (e.g., control circuitry 304) and generate the displays discussed above and below. The client device may receive the displays generated by the remote server and may display the content of the displays locally on equipment device 300. This way, the processing of the instructions is performed remotely by the server while the resulting displays are provided locally on equipment device 300. Equipment device 300 may receive inputs from the user via input interface 310 and transmit those inputs to the remote server for processing and generating the corresponding displays. For example, equipment device 300 may transmit a communication to the remote server indicating that an up/down button was selected via input interface 310. The remote server may process instructions in accordance with that input and generate a display of the application corresponding to the input (e.g., a display that moves a cursor up/down). The generated display is then transmitted to equipment device 300 for presentation to the user.

In some embodiments, the media guidance application is downloaded and interpreted or otherwise run by an interpreter or virtual machine (run by control circuitry 304). In some embodiments, the guidance application may be encoded in the ETV Binary Interchange Format (EBIF), received by control circuitry 304 as part of a suitable feed, and interpreted by a user agent running on control circuitry 304. For example, the guidance application may be an EBIF application. In some embodiments, the guidance application may be defined by a series of JAVA-based files that are received and run by a local virtual machine or other suitable middleware executed by control circuitry 304. In some of such embodiments (e.g., those employing MPEG-2 or other digital media encoding schemes), the guidance application may be, for example, encoded and transmitted in an MPEG-2 object carousel with the MPEG audio and video packets of a program.

User equipment device 300 of FIG. 3 can be implemented in system 400 of FIG. 4 as user television equipment 402, user computer equipment 404, wireless user communications device 406, or any other type of user equipment suitable for accessing content, such as a non-portable gaming machine. For simplicity, these devices may be referred to herein collectively as user equipment or user equipment devices, and may be substantially similar to user equipment devices described above. User equipment devices, on which a media guidance application may be implemented, may function as a standalone device or may be part of a network of devices. Various network configurations of devices may be implemented and are discussed in more detail below.

A user equipment device utilizing at least some of the system features described above in connection with FIG. 3 may not be classified solely as user television equipment 402, user computer equipment 404, or a wireless user communications device 406. For example, user television equipment 402 may, like some user computer equipment 404, be Internet-enabled allowing for access to Internet content, while user computer equipment 404 may, like some television equipment 402, include a tuner allowing for access to television programming. The media guidance application may have the same layout on various different types of user equipment or may be tailored to the display capabilities of the user equipment. For example, on user computer equipment 404, the guidance application may be provided as a web site accessed by a web browser. In another example, the guidance application may be scaled down for wireless user communications devices 406.

In system 400, there is typically more than one of each type of user equipment device but only one of each is shown in FIG. 4 to avoid overcomplicating the drawing. In addition, each user may utilize more than one type of user equipment device and also more than one of each type of user equipment device.

In some embodiments, a user equipment device (e.g., user television equipment 402, user computer equipment 404, wireless user communications device 406) may be referred to as a "second screen device." For example, a second screen device may supplement content presented on a first user equipment device. The content presented on the second screen device may be any suitable content that supplements the content presented on the first device. In some embodiments, the second screen device provides an interface for adjusting settings and display preferences of the first device. In some embodiments, the second screen device is configured for interacting with other second screen devices or for interacting with a social network. The second screen device can be located in the same room as the first device, a different room from the first device but in the same house or building, or in a different building from the first device.

The user may also set various settings to maintain consistent media guidance application settings across in-home devices and remote devices. Settings include those described herein, as well as channel and program favorites, programming preferences that the guidance application utilizes to make programming recommendations, display preferences, and other desirable guidance settings. For example, if a user sets a channel as a favorite on, for example, the web site www.allrovi.com on their personal computer at their office, the same channel would appear as a favorite on the user's in-home devices (e.g., user television equipment and user computer equipment) as well as the user's mobile devices, if desired. Therefore, changes made on one user equipment device can change the guidance experience on another user equipment device, regardless of whether they are the same or a different type of user equipment device. In addition, the changes made may be based on settings input by a user, as well as user activity monitored by the guidance application.

The user equipment devices may be coupled to communications network 414. Namely, user television equipment 402, user computer equipment 404, and wireless user communications device 406 are coupled to communications network 414 via communications paths 408, 410, and 412, respectively. Communications network 414 may be one or more networks including the Internet, a mobile phone network, mobile voice or data network (e.g., a 4G or LTE network), cable network, public switched telephone network, or other types of communications network or combinations of communications networks. Paths 408, 410, and 412 may separately or together include one or more communications paths, such as, a satellite path, a fiber-optic path, a cable path, a path that supports Internet communications (e.g., IPTV), free-space connections (e.g., for broadcast or other wireless signals), or any other suitable wired or wireless communications path or combination of such paths. Path 412 is drawn with dotted lines to indicate that in the exemplary embodiment shown in FIG. 4 it is a wireless path and paths 408 and 410 are drawn as solid lines to indicate they are wired paths (although these paths may be wireless paths, if desired). Communications with the user equipment devices may be provided by one or more of these communications paths, but are shown as a single path in FIG. 4 to avoid overcomplicating the drawing.

Although communications paths are not drawn between user equipment devices, these devices may communicate directly with each other via communication paths, such as those described above in connection with paths 408, 410, and 412, as well as other short-range point-to-point communication paths, such as USB cables, IEEE 1394 cables, wireless paths (e.g., Bluetooth, infrared, IEEE 802-11x, etc.), or other short-range communication via wired or wireless paths. BLUETOOTH is a certification mark owned by Bluetooth SIG, INC. The user equipment devices may also communicate with each other directly through an indirect path via communications network 414.

System 400 includes content source 416 and media guidance data source 418 coupled to communications network 414 via communication paths 420 and 422, respectively. Paths 420 and 422 may include any of the communication paths described above in connection with paths 408, 410, and 412. Communications with the content source 416 and media guidance data source 418 may be exchanged over one or more communications paths, but are shown as a single path in FIG. 4 to avoid overcomplicating the drawing. In addition, there may be more than one of each of content source 416 and media guidance data source 418, but only one of each is shown in FIG. 4 to avoid overcomplicating the drawing. (The different types of each of these sources are discussed below.) If desired, content source 416 and media guidance data source 418 may be integrated as one source device. Although communications between sources 416 and 418 with user equipment devices 402, 404, and 406 are shown as through communications network 414, in some embodiments, sources 416 and 418 may communicate directly with user equipment devices 402, 404, and 406 via communication paths (not shown) such as those described above in connection with paths 408, 410, and 412.

Content source 416 may include one or more types of content distribution equipment including a television distribution facility, cable system headend, satellite distribution facility, programming sources (e.g., television broadcasters, such as NBC, ABC, HBO, etc.), intermediate distribution facilities and/or servers, Internet providers, on-demand media servers, and other content providers. NBC is a trademark owned by the National Broadcasting Company, Inc., ABC is a trademark owned by the American Broadcasting Company, Inc., and HBO is a trademark owned by the Home Box Office, Inc. Content source 416 may be the originator of content (e.g., a television broadcaster, a Webcast provider, etc.) or may not be the originator of content (e.g., an on-demand content provider, an Internet provider of content of broadcast programs for downloading, etc.). Content source 416 may include cable sources, satellite providers, on-demand providers, Internet providers, over-the-top content providers, or other providers of content. Content source 416 may also include a remote media server used to store different types of content (including video content selected by a user), in a location remote from any of the user equipment devices. Systems and methods for remote storage of content, and providing remotely stored content to user equipment are discussed in greater detail in connection with Ellis et al., U.S. Patent No. 7,761,892, issued July 20, 2010.

Media guidance data source 418 may provide media guidance data, such as the media guidance data described above. Media guidance data may be provided to the user equipment devices using any suitable approach. In some embodiments, the guidance application may be a stand-alone interactive television program guide that receives program guide data via a data feed (e.g., a continuous feed or trickle feed). Program schedule data and other guidance data may be provided to the user equipment on a television channel sideband, using an inband digital signal, using an out-of-band digital signal, or by any other suitable data transmission technique. Program schedule data and other media guidance data may be provided to user equipment on multiple analog or digital television channels.

In some embodiments, guidance data from media guidance data source 418 may be provided to users' equipment using a client-server approach. For example, a user equipment device may pull media guidance data from a server, or a server may push media guidance data to a user equipment device. In some embodiments, a guidance application client residing on the user's equipment may initiate sessions with source 418 to obtain guidance data when needed, e.g., when the guidance data is out of date or when the user equipment device receives a request from the user to receive data. Media guidance may be provided to the user equipment with any suitable frequency (e.g., continuously, daily, a user-specified period of time, a system-specified period of time, in response to a request from user equipment, etc.). Media guidance data source 418 may provide user equipment devices 402, 404, and 406 the media guidance application itself or software updates for the media guidance application.

In some embodiments, the media guidance data may include viewer data. For example, the viewer data may include current and/or historical user activity information (e.g., what content the user typically watches, what times of day the user watches content, whether the user interacts with a social network, at what times the user interacts with a social network to post information, what types of content the user typically watches (e.g., pay TV or free TV), mood, brain activity information, etc.). The media guidance data may also include subscription data. For example, the subscription data may identify to which sources or services a given user subscribes and/or to which sources or services the given user has previously subscribed but later terminated access (e.g., whether the user subscribes to premium channels, whether the user has added a premium level of services, whether the user has increased Internet speed). In some embodiments, the viewer data and/or the subscription data may identify patterns of a given user for a period of more than one year. The media guidance data may include a model (e.g., a survivor model) used for generating a score that indicates a likelihood a given user will terminate access to a service/source. For example, the media guidance application may process the viewer data with the subscription data using the model to generate a value or score that indicates a likelihood of whether the given user will terminate access to a particular service or source. In particular, a higher score may indicate a higher level of confidence that the user will terminate access to a particular service or source. Based on the score, the media guidance application may generate promotions and advertisements that entice the user to keep the particular service or source indicated by the score as one to which the user will likely terminate access.

In some embodiments, a database that stores information about scenes of a media asset may be located at the media content source 416, media guidance data source 418, any of the user equipment 402, 404, and/or 406, or any combination thereof. For example, the database may be located in a server/location remote to a user equipment (e.g., on a different network from the user equipment), may be located in a server location proximate to a user equipment (e.g., on a same network as the user equipment, in the same building complex/house as the user equipment), or may be stored in storage 308 of the user equipment itself.

As referred to herein, a scene should be understood to be a portion of video of a media asset. The scene may be defined by a start time, end time, and/or duration of a timeline of the media asset, by a start frame and/or end frame of video of the media asset, a pointer to a start frame and/or end frame of video of the media asset, any other suitable delimiter of a portion of video of a media asset, or any combination thereof. For example, one or more scenes may be defined by a fixed interval in time for all scenes (e.g., 60 seconds), a variable interval of time for each scene (e.g., 80 seconds), a fixed number of frames of video, or a variable number of frames of video. Definition of scenes for playback is discussed in greater detail in, for example, Harb, U.S. Patent Application Publication No. 2016/0249116 A1, filed February 25, 2015.

The database may store records that cross- reference identifiers or tags of scenes with a start time and end time of a respective scene, or a start time and duration of a respective scene. For example, the database may store records that cross-reference a media asset with one or more identifiers or tags of scenes, and/or start times and end times of respective scenes. For example, the database may store with the records, metadata about the scene, such as a genre of the scene, actor/actresses appearing in the scene, number of times the scene has been selected for viewing, or any other suitable information. Although a single database has been described, it should be understood that multiple databases may be used.

In some embodiments, the records of the database may be pre-defined like the media guidance data of the media guidance data source 418. For example, the records of the database may be based upon scenes that have been identified by a content provider, a director, and/or producer, etc. of a corresponding media asset and stored into the database. The records of the database may include scenes that have been defined by one or more users. Selection of scenes for playback is discussed in greater detail in, for example, the incorporated Harb, U.S. Patent Application Publication No. 2016/0249116 A1.

Media guidance applications may be, for example, stand-alone applications implemented on user equipment devices. For example, the media guidance application may be implemented as software or a set of executable instructions which may be stored in storage 308, and executed by control circuitry 304 of a user equipment device 300. In some embodiments, media guidance applications may be client-server applications where only a client application resides on the user equipment device, and server application resides on a remote server. For example, media guidance applications may be implemented partially as a client application on control circuitry 304 of user equipment device 300 and partially on a remote server as a server application (e.g., media guidance data source 418) running on control circuitry of the remote server. When executed by control circuitry of the remote server (such as media guidance data source 418), the media guidance application may instruct the control circuitry to generate the guidance application displays and transmit the generated displays to the user equipment devices. The server application may instruct the control circuitry of the media guidance data source 418 to transmit data for storage on the user equipment. The client application may instruct control circuitry of the receiving user equipment to generate the guidance application displays.

Content and/or media guidance data delivered to user equipment devices 402, 404, and 406 may be over-the-top (OTT) content. OTT content delivery allows Internet-enabled user devices, including any user equipment device described above, to receive content that is transferred over the Internet, including any content described above, in addition to content received over cable or satellite connections. OTT content is delivered via an Internet connection provided by an Internet service provider (ISP), but a third party distributes the content. The ISP may not be responsible for the viewing abilities, copyrights, or redistribution of the content, and may only transfer IP packets provided by the OTT content provider. Examples of OTT content providers include YOUTUBE, NETFLIX, and HULU, which provide audio and video via IP packets. Youtube is a trademark owned by Google Inc., Netflix is a trademark owned by Netflix Inc., and Hulu is a trademark owned by Hulu, LLC. OTT content providers may additionally or alternatively provide media guidance data described above. In addition to content and/or media guidance data, providers of OTT content can distribute media guidance applications (e.g., web-based applications or cloud-based applications), or the content can be displayed by media guidance applications stored on the user equipment device.

Media guidance system 400 is intended to illustrate a number of approaches, or network configurations, by which user equipment devices and sources of content and guidance data may communicate with each other for the purpose of accessing content and providing media guidance. The embodiments described herein may be applied in any one or a subset of these approaches, or in a system employing other approaches for delivering content and providing media guidance. The following four approaches provide specific illustrations of the generalized example of FIG. 4.

In one approach, user equipment devices may communicate with each other within a home network. User equipment devices can communicate with each other directly via short-range point-to-point communication schemes described above, via indirect paths through a hub or other similar device provided on a home network, or via communications network 414. Each of the multiple individuals in a single home may operate different user equipment devices on the home network. As a result, it may be desirable for various media guidance information or settings to be communicated between the different user equipment devices. For example, it may be desirable for users to maintain consistent media guidance application settings on different user equipment devices within a home network, as described in greater detail in Ellis et al., U.S. Patent Publication No. 2005/0251827, filed July 11, 2005. Different types of user equipment devices in a home network may also communicate with each other to transmit content. For example, a user may transmit content from user computer equipment to a portable video player or portable music player.

In a second approach, users may have multiple types of user equipment by which they access content and obtain media guidance. For example, some users may have home networks that are accessed by in-home and mobile devices. Users may control in-home devices via a media guidance application implemented on a remote device. For example, users may access an online media guidance application on a website via a personal computer at their office, or a mobile device such as a PDA or web-enabled mobile telephone. The user may set various settings (e.g., recordings, reminders, or other settings) on the online guidance application to control the user's in-home equipment. The online guide may control the user's equipment directly, or by communicating with a media guidance application on the user's in-home equipment. Various systems and methods for user equipment devices communicating, where the user equipment devices are in locations remote from each other, is discussed in, for example, Ellis et al., U.S. Patent No. 8,046,801, issued October 25, 2011.

In a third approach, users of user equipment devices inside and outside a home can use their media guidance application to communicate directly with content source 416 to access content. Specifically, within a home, users of user television equipment 402 and user computer equipment 404 may access the media guidance application to navigate among and locate desirable content. Users may also access the media guidance application outside of the home using wireless user communications devices 406 to navigate among and locate desirable content.

In a fourth approach, user equipment devices may operate in a cloud computing environment to access cloud services. In a cloud computing environment, various types of computing services for content sharing, storage or distribution (e.g., video sharing sites or social networking sites) are provided by a collection of network-accessible computing and storage resources, referred to as "the cloud." For example, the cloud can include a collection of server computing devices, which may be located centrally or at distributed locations, that provide cloud-based services to various types of users and devices connected via a network such as the Internet via communications network 414. These cloud resources may include one or more content sources 416 and one or more media guidance data sources 418. In addition or in the alternative, the remote computing sites may include other user equipment devices, such as user television equipment 402, user computer equipment 404, and wireless user communications device 406. For example, the other user equipment devices may provide access to a stored copy of a video or a streamed video. In such embodiments, user equipment devices may operate in a peer-to-peer manner without communicating with a central server.

The cloud provides access to services, such as content storage, content sharing, or social networking services, among other examples, as well as access to any content described above, for user equipment devices. Services can be provided in the cloud through cloud computing service providers, or through other providers of online services. For example, the cloud-based services can include a content storage service, a content sharing site, a social networking site, or other services via which user-sourced content is distributed for viewing by others on connected devices. These cloud-based services may allow a user equipment device to store content to the cloud and to receive content from the cloud rather than storing content locally and accessing locally-stored content.

A user may use various content capture devices, such as camcorders, digital cameras with video mode, audio recorders, mobile phones, and handheld computing devices, to record content. The user can upload content to a content storage service on the cloud either directly, for example, from user computer equipment 404 or wireless user communications device 406 having content capture feature. Alternatively, the user can first transfer the content to a user equipment device, such as user computer equipment 404. The user equipment device storing the content uploads the content to the cloud using a data transmission service on communications network 414. In some embodiments, the user equipment device itself is a cloud resource, and other user equipment devices can access the content directly from the user equipment device on which the user stored the content.

Cloud resources may be accessed by a user equipment device using, for example, a web browser, a media guidance application, a desktop application, a mobile application, and/or any combination of access applications of the same. The user equipment device may be a cloud client that relies on cloud computing for application delivery, or the user equipment device may have some functionality without access to cloud resources. For example, some applications running on the user equipment device may be cloud applications, i.e., applications delivered as a service over the Internet, while other applications may be stored and run on the user equipment device. In some embodiments, a user device may receive content from multiple cloud resources simultaneously. For example, a user device can stream audio from one cloud resource while downloading content from a second cloud resource. Or a user device can download content from multiple cloud resources for more efficient downloading. In some embodiments, user equipment devices can use cloud resources for processing operations such as the processing operations performed by processing circuitry described in relation to FIG. 3.

Control circuitry (e.g., control circuitry 304) receives a request, while a first scene of a first media asset is displayed, to access a second scene of a second media asset, e.g., based on a user selection of the second scene. For example, control circuitry 304 may receive a request, while a first scene for a first media asset "The Bourne Identity" (e.g., as illustrated in FIG. 1) is displayed, to access a second scene "ER View" (e.g., corresponding to indicator 128 of FIG. 1) of a scheduled second media asset "ER" (e.g., as illustrated in FIG. 1), based on a user selection of the second scene (e.g., via selection of indicator 128 of FIG. 1, or of indicator 230 of FIG. 2).

Without receiving further user inputs, control circuitry 304 determines that a first point in time corresponds to a start time of the second scene while the first media asset is generated for display. For example, control circuitry may determine that the current time is 8:15 PM, and that the second scene "ER View" of "ER" starts at 8:15 PM, while the first scene from "The Bourne Identity" is generated for display. Without receiving further user inputs, control circuitry 304 replaces the first scene with the second scene based on the first point in time corresponding to the start time. For example, control circuitry may replace the first scene from "The Bourne Identity" with the second scene "ER View" of "ER" based on determining that the current time, 8:15 PM, corresponds to the start time of the second scene at 8:15 PM. Without receiving further user inputs, control circuitry 304 may determine that a second point in time corresponds to an end time of the second scene while the second scene is generated for display. For example, control circuitry may determine that a current time is 8:20 PM, and that the second scene "ER View" of "ER" ends at 8:20 PM. Without receiving further user inputs, control circuitry 304 may replace the second scene with the first media asset based on the second point in time corresponding to the end time. For example, control circuitry 304 may replace the second scene "ER View" of "ER" with the first media asset "The Bourne Identity" based on determining that the current time, 8:20 PM, corresponds to the end time of the second scene at 8:20 PM.

As referred to herein, the term "replace" or "replacing" a media asset should be understood to mean a method or technique for replacing the display of video of a first media asset with a video of a second media asset. For example, replacing may include pausing a media asset (e.g., by transmitting a request to pause to a server for an on-demand scheduled media asset, or by storing the video of the media asset as needed for a broadcast scheduled media asset), resuming a paused media asset (e.g., by transmitting a request to resume to a server for an on-demand scheduled media asset, or by playing back the video of the media asset as needed for a broadcast scheduled media asset). For example, replacing may include moving video of a first media asset from a background to a foreground, swapping video of a first media asset in a foreground with video of a second media asset in a PIP window, or transitioning between video displayed in a first tab of a browser, and video displayed in a second tab of the browser.

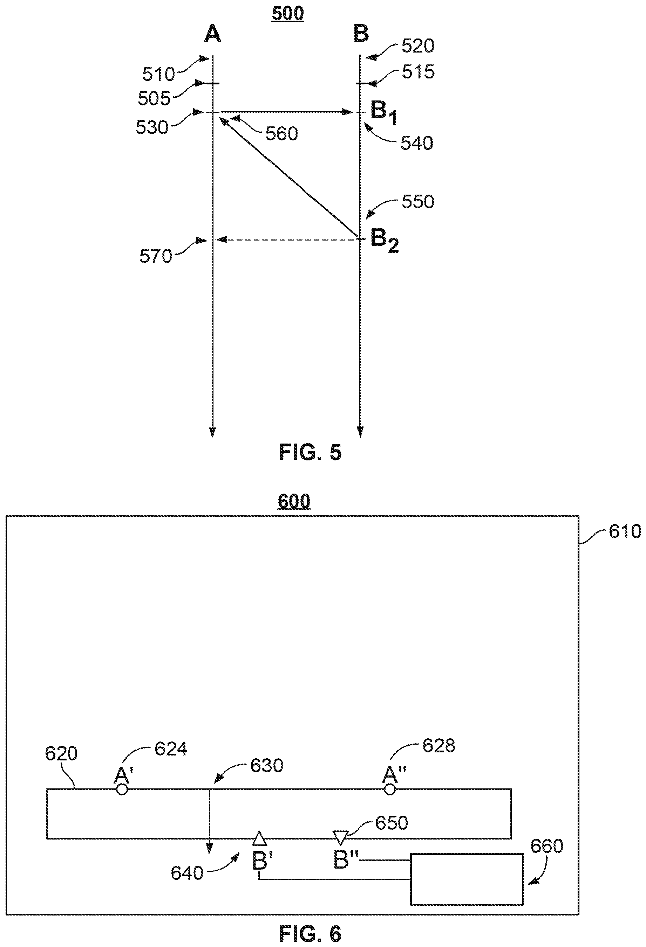

FIG. 5 shows an illustrative timing diagram 500 for transitioning between scenes of interest in an illustrative media system. Timing diagram 500 includes a first timeline 510 corresponding to a first media asset "A" (e.g., "The Bourne Identity"), and a second timeline 520 corresponding to a second media asset "B" (e.g., "ER"). Points along each of timelines 510 and 520 correspond to frames of the first media asset A and second media asset B respectively. Operation of the transition between a first scene of a first media asset and a second scene of a second media asset may be described with reference to timing diagram 500. First timeline 510 may include point 505, corresponding to a time when control circuitry of the first user equipment accesses the first media asset. Timeline 510 includes point 530, corresponding to a time when control circuitry of the first user equipment replaces a display of the first media asset with a second scene of the second media asset corresponding to timeline 520.

First timeline 510 may also include point 570, which may correspond to a point in the first media asset at which control circuitry of the first user equipment may resume display of the first media asset based on determining that the second scene of the second media asset has ended. In some embodiments, control circuitry of the first user equipment may resume display of the first media asset from point 530, which corresponds to the point in the first media asset at which the control circuitry replaced the display with the second scene of the second media asset, instead of point 570. For example, if the first media asset is an on-demand unscheduled media asset, control circuitry of the first user equipment may pause playback of the first media asset, by for example transmitting a request to pause playback to a server (e.g., media content source 416, or any other suitable server) from which the first media asset is received. For example, if the first media asset is a broadcast scheduled media asset, control circuitry of the first user equipment may cache received frames of the first media content in storage 308, and retrieve the first media content from storage 308 for playback based on determining that the second scene from the second media asset has ended.

Second timeline 520 may include point 515, which corresponds to point 505 of the first timeline 510. Second timeline 520 includes point 540, which indicates a start time of a second scene in a second media asset corresponding to timeline 520. Second timeline may also include point 550, which indicates an end time of the second scene in the second media asset corresponding to timeline 520. In some embodiments, a start time corresponding to point 540 and an end time corresponding to point 550 may be included in metadata of media guidance data for the second media asset that is delivered to a user equipment device. For example, control circuitry 304 of a user equipment may determine a start time and an end time of the second scene of the second media asset based on the received media guidance data for the second media asset. In some embodiments, a start time corresponding to point 540 and an end time corresponding to point 550 may be stored in a database (e.g., in storage 308 of a first user equipment device as shown in FIG. 3, or in a media guidance data source 418 as shown in FIG. 4). Control circuitry of a user equipment may cross-reference a second scene with a database of time periods that correspond to scenes of media assets to determine a time period at which the second scene will be generated for display.

As referred to herein, the term "time period" should be understood to mean an interval of time (e.g., measured in seconds, minutes), an interval of frames (e.g., a number of frames between I-frames in an MPEG video stream), or any other suitable metric for measuring duration and time.

Point 505 on timeline 510 may indicate a time at which control circuitry 304 of a first user equipment first accesses the first media asset "A." For example, in response to receiving a first user selection of a first program listing from any of program listings (e.g., 108, 114, 116, 118) in grid 102 of FIG. 1, or of listings (e.g., 206, 208, 210, 212) in FIG. 2, control circuitry 304 may generate for display the first media asset corresponding to the selected program listing (e.g., "The Bourne Identity"). The first media asset corresponding to first timeline 510 may be a scheduled media asset (e.g., a broadcast program), or may be an unscheduled media asset (e.g., an on-demand program).

In some embodiments, the second media asset corresponding to the second timeline 520 may be a scheduled media asset (e.g., a broadcast program). For example, point 515 on timeline 520 may indicate a scheduled broadcast time corresponding to point 505 on timeline 510. As playback of the first media asset proceeds, control circuitry 304 of a first user equipment device determines that a first point in time corresponds to a start time of the second scene and determines to replace the first scene of the first media asset (e.g., "The Bourne Identity") with a second scene (e.g., an "ER View" scene) of a second media asset (e.g., "ER") on the display screen based on the determination.

As referred to herein, the term "playback position" should be understood to mean any indicator of a position within a media asset, such as a frame index or time stamp, at which a media asset may be played back. For example, a playback position may be a time along a timeline (e.g., any of timelines 510 and 520) such as points 505, 530 and 570 at which a program may be played back. For example, in the context of MPEG video streams, a playback position may be an I-frame (independent frame). For example, if a playback position is a time corresponding to a B-frame (bi-predictive frame) or P-frame (predictive frame), control circuitry may interpolate frames of video in order to play back video from the position of the B-frame or P-frame.

In some embodiments, control circuitry may determine that a second point in time corresponds to an end time of the second scene while the second scene is generated for display and replace the second scene with the first media asset on the display screen on the second point in time corresponding to the end time. For example, control circuitry may determine end time for an "ER View" of the second media asset "ER" based on metadata received as part of media guidance data for the second media asset "ER." The end time may be included as part of the metadata, or may be determined based on adding a start time and duration of a scene from the metadata. For example, control circuitry may determine that an end time of the selected scene corresponds to point 550 on the second timeline 520.

In some implementations, control circuitry may determine that the second point in time corresponds to the end time of the scene by initiating a countdown corresponding to the length of the second scene. For example, control circuitry may determine that the second scene "ER" has a duration of 10 minutes, and initiate a 10-minute countdown timer upon replacing the display of a first media asset with the second scene. Upon expiration of the 10-minute countdown, control circuitry determines that the second point in time corresponds to the end time, and replaces the display of the scene "ER" with the first media asset "The Bourne Identity."

In some embodiments, after determining that playback of the second scene has reached an end time (e.g., point 550 on the second timeline 520), control circuitry may replace the display of the second scene with the first media asset starting from point 570. For example, if the first media asset is a scheduled media asset, control circuitry may replace the display of second scene with currently received video corresponding to the scheduled media asset at a time corresponding to point 570. For example, if the first media asset is an unscheduled media asset, control circuitry may replace the display of the second scene with the first media asset by incrementing a playback position of the unscheduled media asset by a time duration corresponding to the duration of the second scene.

In some embodiments, control circuitry may pause the first media asset at point 530 upon replacing the display with the second media asset, and resume playback of the first media asset from point 530. For example, the first media asset may be a scheduled media asset. Control circuitry may store received video corresponding to the scheduled media asset in storage 308 while the second scene is played back. Based on determining that a second point in time corresponds to an end time of the second media asset, control circuitry may replace the display of the second media asset with the stored video of the first media asset. For example, the first media asset may be an unscheduled media asset. Based on determining that a second point in time corresponds to an end time of the second media asset, control circuitry may replace the display of the second scene with video retrieved from storage 308 if the unscheduled media asset is stored locally, or retrieve the unscheduled media asset from media content source 416 for playback from point 530.

In some embodiments, the second media asset corresponding to the second timeline 520 may be an unscheduled media asset (e.g., an on-demand program), that is currently being played back by control circuitry of a second user equipment of another second user (e.g., within the same household on the same network as a first user equipment, or remote on a different network from the first user equipment). The start time and end time of a scene may be defined by a user during a previous viewing of the media asset. The start time and end time of the media asset may also correspond to metadata for certain parental ratings. For example, a parent may be interested in viewing scenes related to a certain genre that are played back from a user equipment operated by a child. For example, second control circuitry of the second user equipment device may transmit start time and end time information to the first user equipment. Second control circuitry may send a message to the first user equipment indicating when a second scene has started playback on the second equipment device, and may send a message to the first user equipment device indicating when the second scene has completed playback on the second user equipment device. Based on receiving the message indicating when playback of the second scene has started, first control circuitry of a first user equipment device may replace a display of a first media asset with the second scene. Based on receiving the message indicating when playback of the second scene has ended, first control circuitry of the first user equipment device may replace a display of the second scene with the first media asset.

FIG. 6 shows an illustrative display 600 of a user equipment (e.g., user equipment 402, 404, and/or 406) that control circuitry 304 can generate for display to a user while viewing and transitioning between scenes of interest in an illustrative media system in accordance with some embodiments of the disclosure. FIG. 6 includes video of a first media asset 610, time bar 620, current playback position indicator 630, second scene start indicator 640, second scene end indicator 650, and second media asset preview window 660. Second scene start indicator 640 may correspond to points 530 and 540. Second scene end indicator 650 may correspond to points 550 and 570. FIG. 6 also includes scene start selector 624 and scene end selector 628. Control circuitry may generate for display or remove from display the time bar 620.

In some embodiments, the control circuitry may advance the current playback position indicator 630 as the playback of the first media asset proceeds. Control circuitry of a user equipment device may determine, for example, that a first point in time (e.g., a current time indicated by current playback position indicator 630) corresponds to a start time of the second scene as indicated by scene start indicator 640. Based on this determination, control circuitry replaces the display of the first media asset (e.g., video 610) with the second scene. Control circuitry may determine, for example, that a second point in time (e.g., a current time indicated by current time playback position indicator 630) corresponds to an end time of the second scene as indicated by scene end indicator 650. Based on this determination, control circuitry may replace the display of the second scene with video of the first media asset.

In some embodiments, control circuitry may generate for display the second media asset preview window 660 to provide a preview of the second media asset, until the control circuitry replaces the display of the video 610 of the first media asset with the video of the selected scene.

In some embodiments, control circuitry of a user equipment (e.g., 402, 404 and/or 406) may receive a user selection that defines scenes that may be selected for transitioned playback as second scenes. For example, control circuitry may receive a user selection, via user input interface 310, of a scene start time via a scene start selector 624. Control circuitry may also receive a user selection of a scene end time via a scene end selector 628. Control circuitry may store the scene start and scene end information in a database, stored in storage 308, or may transmit the scene start and scene end information to a database at a remote server, such as media guidance data source 418 or any other suitable server or remote location. Thereafter, control circuitry of the media guidance data source 418 at which the database is stored may assemble the scene information for transmission as part of media guidance data sent with the media asset in which the scene start and scene end information was selected.

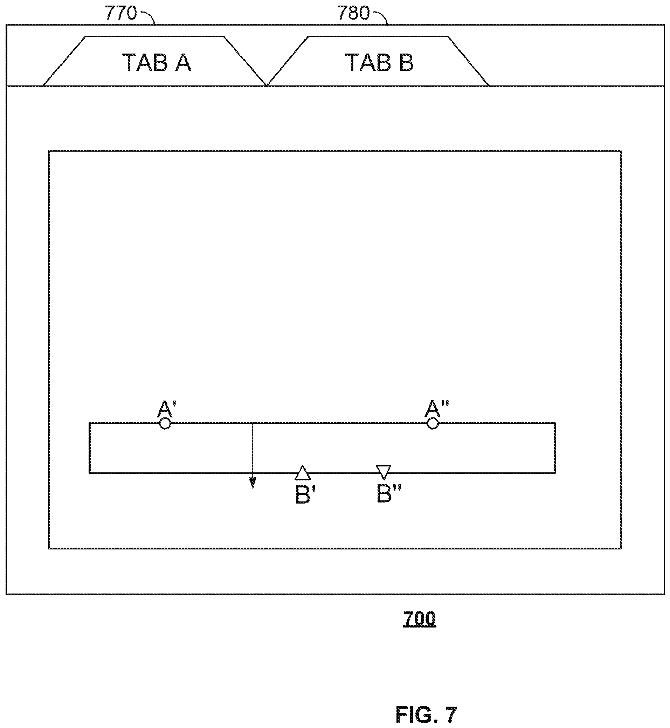

FIG. 7 shows an illustrative display 700 that can be generated for display to a user in an Internet browser while viewing and transitioning between scenes of interest in an illustrative media system in accordance with some embodiments. For example, control circuitry of a user equipment device (e.g., any of user devices 402, 404, and 406) may generate for display an internet browser including a first tab 770 and a second tab 780. Control circuitry may generate for display a media guidance application in a first tab 770. Control circuitry generates for display video for a first media asset, in this example in a first tab 770 based on receiving a user selection of a program listing corresponding to the first media asset from the media guidance application. Control circuitry may generate for display video for a second media asset in a second tab 780 based on receiving a user selection of a program listing corresponding to the second media asset (e.g., from a media guidance application generated for display in the first tab 770 or in the second tab 780). The display of video in the first tab 770 and in the second tab 780 may be similar to the display 600 in FIG. 6. Control circuitry replaces the display of the first media asset (e.g., "Dr. Phil" in first tab 770) by the display of the second scene (e.g., "Final Round" scene) of the second media asset (e.g., "Miss USA"), based on determining that a first point in timer corresponds to a start time of the second scene by transitioning from the first tab 770 to the second tab 780.

In some embodiments, control circuitry initially generates for display the video of the first media asset in first tab 770, while second tab 780 has not yet been opened and control circuitry replaces the display of the first media asset by the selected second scene by generating a second tab 780 for display.

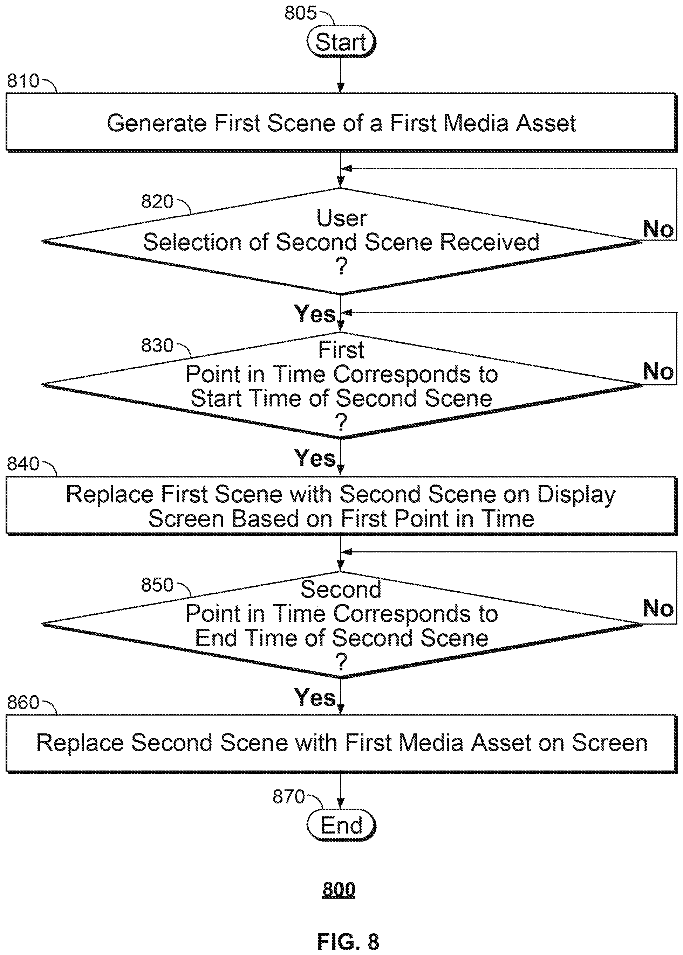

FIG. 8 is a flowchart of illustrative steps involved in transitioning between scenes of interest in accordance with some embodiments of the disclosure. It should be noted that process 800 or any step thereof could be performed on, or provided by, any of the devices shown in FIGS. 3-4. For example, process 800 may be executed by control circuitry 304 (FIG. 3) as instructed by control circuitry implemented on user equipment 402, 404, and/or 406 (FIG. 4) in order to receive a plurality of inputs identifying an indication of interest for each of a plurality of scenes for a media asset. In addition, one or more steps of process 800 may be incorporated into or combined with one or more steps of any other process or embodiment.

Although the following steps of the flowchart will be discussed as predominantly being performed by a control circuitry 304 of a user equipment device, it should be understood that each and any of the illustrative steps of process 800 described in the flowchart may be performed by control circuitry of a server (e.g., media content source 416, media guidance data source 418, or any other suitable server), control circuitry of user equipment device 300, any other suitable server or source, and/or any combination thereof.

At step 810, control circuitry 304 of a user equipment device generates for display a first scene of a first media asset (e.g., scenes for a scheduled media asset such as the media asset "The Bourne Identity"). At step 820, the control circuitry 304 of the user equipment device determines whether a user selection of a second scene has been received. For example, control circuitry may receive a request to access a second scene based on a user selection received via user input interface 310. If a user selection of a second scene has not been received, the process polls on step 820, otherwise the process proceeds to step 830. Control circuitry may receive the request to access the second scene before or during playback of the first media asset. For example, control circuitry may receive the request to access the second scene based on a selection of indicator 128 or indicator 230, as illustrated in reference to FIG. 1 and FIG. 2 prior to receiving a selection of the first media asset "Bourne Identity" (as shown in FIG. 1). For example, after receiving a selection of the first media asset "Bourne Identity," control circuitry may receive a request to access the video mosaic display 200, and subsequently receive a selection of indicator 230.

In some embodiments, all media asset identifiers (e.g., program listings) illustrated in FIG. 1 and FIG. 2 may have an associated indicator indicating availability of scenes for selection. In some embodiments, in contrast to receiving a selection of a second scene of a media asset from the display 100 of FIG. 1 or the display 200 of FIG. 2, control circuitry may automatically select scenes of interest to a user based on a user profile of the user. For example, control circuitry may retrieve (e.g., from a database or from metadata delivered with media guidance data) identifiers of scenes of media assets scheduled to be broadcast in a subsequent interval (e.g., 30 minutes) or same interval as a currently displayed first media asset. Control circuitry may cross-reference metadata of each scene with a user profile, and based on the cross-reference, determine a metric for each scene. For example, control circuitry may determine the metric for each scene by counting a number of metadata fields of the scene that correspond to values from the user profile. For example, the user profile may include weights for a number of fields (e.g., 0.5 for genre, 0.1 for actor), and control circuitry may compute a sum of products of the weights with values of the metadata fields.

Based on the determined metrics, control circuitry may sort the scenes in the subsequent intervals and select a maximum number of scenes (e.g., to limit a number of scenes displayed on a screen), or a number of scenes that exceed a threshold, and generate for display a list of the scenes in the display 600 of FIG. 6 or display 700 of FIG. 7. Accordingly, a user may be informed of potential scenes of relevance to the user and select scenes for subsequent transition.

In some embodiments, criteria for the cross-referencing and sorting may be selected by a user. For example, a user may designate "favorite actor" as a criterion for cross-referencing scenes to determine metrics for scenes. For example, control circuitry may cross-reference metadata for a scene retrieved from the database with a user's profile to determine if the scene includes a user's favorite actor. In response to determining that the scene includes a user's favorite actor, control circuitry may assign a higher metric to the scene as compared to scenes that do not include the user's favorite actor.

In some embodiments, control circuitry may determine that a subset of the upcoming scenes corresponds to commercial breaks on a source of a currently displayed media asset. For example, control circuitry may determine, based on media guidance data received from media guidance data source 418, that the scene "ER View" is scheduled to be broadcast during a commercial broadcast that is scheduled for a currently displayed media asset, "The Bourne Identity." Based on this determination, control circuitry may generate for display the "ER View" scene at the beginning of the list of scene identifiers generated for display in FIG. 6 and FIG. 7. Control circuitry may update the sort order of scene identifiers as time progresses to a subsequent interval (e.g., to a subsequent 30-minute interval, or shorter interval), or as a request to access a different media asset for display is received. For example, control circuitry may receive a request to change a channel to access the media asset "King of the Hill" from "The Bourne Identity" at 7:45 PM. Control circuitry may identify the scheduled commercial broadcasts corresponding to the scheduled media asset "Joe Millionaire" in the subsequent 30-minute interval. Based on determining that the "ER View" scene does not overlap (e.g., based on scheduled start time and end time) with any scheduled commercial broadcast of "Joe Millionaire," control circuitry may reduce the rank of the "ER View." Control circuitry may generate for display the "ER View" scene identifier lower in a list of scene identifiers generated for display in FIG. 600 or FIG. 700, or not generate for display the "ER View" scene at all, if the rank falls below a threshold, or is no longer among a top number of scene identifiers.

At step 830, control circuitry 304 determines whether a first point in time corresponds to a start time of the second scene. If the control circuitry determines that the first point in time corresponds to the start time of the second scene, the process proceeds to step 840, otherwise the process proceeds to step 830. The first point in time is an audio cue indicating a transition from the first media asset to a second scene of the second media asset. In some embodiments, control circuitry 304 determines a time period at which the second scene will be generated for display, where the time period includes the start time and the end time, based on data transmitted with the second media asset. For example, metadata in media guidance data transmitted with the second media asset may include start times and end times of scenes of the second media asset that may be selected for transitioned display. The media guidance data may be transmitted from media guidance data source 418, media content source 416, or any combination thereof. In some implementations, the media guidance data, which includes the start time and end times of scenes, may be transmitted prior to transmission of the corresponding second media asset. For example, control circuitry of a user equipment may receive, from input/output path 302, the media guidance data for scenes corresponding to second media asset (e.g., "ER View") and store the received media guidance data in storage 308. For example, control circuitry may retrieve the metadata from a database (e.g., stored in storage 308 or stored at a server), as a result of cross-referencing operations discussed above in reference to step 820.

In some embodiments, control circuitry may store the starttime (e.g., 8:15 PM for ER View) and endtime (e.g., 8:20 PM for ER View) of a selected second scene in storage 308 (e.g., in RAM). Prior to the starttime of the selected scene, control circuitry may generate a thread that sleeps until the starttime (e.g., 8:15 PM). At the start time, control circuitry may operate the thread to generate an interruption that notifies control circuitry that the starttime of the selected second scene (e.g., "ER View") has arrived. In some embodiments, control circuitry may continuously poll a clock to determine whether a starttime of the second scene matches a current time. Although polling may be simpler to implement in software, polling may consume more resources (e.g., memory) than use of interruption.

In some embodiments, control circuitry may cross-reference the second scene with a database including time periods that correspond to scenes of media assets to determine a time period at which the second scene will be generated for display. For example, media guidance data may include a number of identifiers of scenes of interest, but not the start time and end time. Control circuitry may receive the identifiers of the scenes of interest and generate for display the scenes of interest. In response to receiving a request to access a scene of interest, control circuitry 304 may cross-reference the scene of interest with a database stored at a server, media content source 416, media guidance data source 418, or in storage 308 of a user equipment device or any combination thereof. Control circuitry may determine a time period (e.g., start time and end time of a scene of interest based on the cross-reference).

Control circuitry 304 determines that a first playback position in the first media asset corresponds to the first point in time, and determines to replace the first scene with the second scene on the display screen based on a current playback position in the first media asset corresponding to the first playback position. For example, control circuitry may determine that a first playback position 530 in first timeline 510 of a first media asset, corresponds to a first point in time 540, and accordingly a start time of a second scene of a second media asset.

In a method outside the scope of the claims, control circuitry 304 may determine a first frame in a first media asset that corresponds to a first point in time, and determine to replace the first scene with the second scene on the display screen based on a current frame in the first media asset corresponding to the first frame. For example, control circuitry 304 determines a frame of an encoded video that is closest in proximity to a start time of the second scene. In the context of MPEG-encoded video, although the frame may be an I-frame, B-frames and P-frames may be used as well. Control circuitry may, upon receiving the frame for decoding, replace the display of the first media asset with the second media asset.

Control circuitry determines that a first audio cue in the first media asset corresponds to the first point in time, and determines to replace the first scene with the second scene on the display screen based on a current audio cue in the first media asset corresponding to the first audio cue. For example, transition to a second scene of a second media asset may be more seamless and less disruptive to a viewer if the transitions occur during pauses in the video, or within some context. As referred to herein, an audio cue should be understood to refer to a spoken word (e.g., as recognized from audio speech from the first scene of the first media asset), pauses of non-spoken speech (e.g., measured as a period of time during which a metric of audio activity, such as energy of audio stream, is below a threshold), an inaudible signal (e.g., a low frequency tone inaudible to a user but detectable through filtering and processing by control circuitry), spoken words associated with metadata from the second scene, or any other suitable audio cue.

For example, control circuitry 304 of a user equipment device may determine that an audio cue is a pause (e.g., based on performing a windowed discrete cosine transform, windowed fourier transform or any other suitable transform on a predetermined portion of the media asset, and overall energy of the portion, and determining that the energy is below a threshold). Based on determining that the audio cue is a pause, control circuitry may replace the display of a first media asset with the second scene of the second media asset. For example, control circuitry 304 may analyze the spoken audio (e.g., by performing speech recognition on an audio stream of the first media asset) until a word such as "competition" or "finals" is detected from a first media asset (e.g., "Dr. Phil"), and in response replace the display of the first media asset with the display of "Dr. Phil" with a "Final Round" scene from the media asset "Miss USA." Systems and methods that use automatic speech recognition are described in greater detail in Venkataram et. al, U.S. Patent Application Publication No. 2016/092447, filed September 30, 2014 .

For example, control circuitry may determine that an audio cue is an inaudible signal (e.g., a low frequency tone). Control circuitry may continuously apply a band-pass filter to a moving window of audio from the first media asset, where the band-pass filter is applied around the frequency range of the inaudible tone. Control circuitry may compute an energy of the spectrum within this window, and based on determining that the computed energy is above a threshold, determine that an inaudible tone has been detected, and determine that the first scene of the first media asset should be replaced by the selected second scene of the second media asset. For example, the inaudible tone may be delivered as part of the audio first media asset to indicate positions at which a transition to a second media asset may be performed. Details of such a transition are discussed further below in the context of tags.

In a method outside the scope of the claims, control circuitry may determine that a first tag in the first media asset corresponds to the first point in time, and determine to replace the first scene with the second scene on the display screen based on detecting the first tag in the first media asset. As referred to herein, the term "tag" should be understood to mean any identifier, such as a frame index, a time stamp, or any other suitable identifier that indicates points for transition. For example, the tag in the first media asset may be set by metadata received as part of media guidance data for the first media asset to indicate a point at which a transition to the second scene of a second media asset 14/501,504, filed September 30, 2014.

For example, control circuitry may determine that an audio cue is an inaudible signal (e.g., a low frequency tone). Control circuitry may continuously apply a band-pass filter to a moving window of audio from the first media asset, where the band-pass filter is applied around the frequency range of the inaudible tone. Control circuitry may compute an energy of the spectrum within this window, and based on determining that the computed energy is above a threshold, determine that an inaudible tone has been detected, and determine that the first scene of the first media asset should be replaced by the selected second scene of the second media asset. For example, the inaudible tone may be delivered as part of the audio first media asset to indicate positions at which a transition to a second media asset may be performed. Details of such a transition are discussed further below in the context of tags.

In some embodiments, control circuitry may determine that a first tag in the first media asset corresponds to the first point in time, and determine to replace the first scene with the second scene on the display screen based on detecting the first tag in the first media asset. As referred to herein, the term "tag" should be understood to mean any identifier, such as a frame index, a time stamp, or any other suitable identifier that indicates points for transition. For example, the tag in the first media asset may be set by metadata received as part of media guidance data for the first media asset to indicate a point at which a transition to the second scene of a second media asset may occur. Control circuitry may determine that a current time corresponds to the first tag in the media asset, and the first tag corresponds to the first point in time (e.g., the start time of the second scene). Control circuitry may upon determining that the tag corresponds to a current time, replace the display of the first media asset with a display of the second scene of the second media asset.

In some embodiments, positions of tags and inaudible tones, or other indicators of transition points in a first media asset may not identically match starttime and endtimes of a selected second scene. If the position of a tag, inaudible tone, or other indicator of a transition takes place after a starttime of a selected scene, control circuitry may store the selected scene to storage 308, and continue generating for display the first scene of the first media asset until control circuitry determines a subsequent tag or identifier of a transition point in the first media asset, at which point control circuitry may replace the display of the first media asset with the stored version of the selected second scene.

If the position of a tag, inaudible tone, or other indicator of a transition is prior to a scene start time, control circuitry may determine the next proximate position of a tag (e.g., as received or retrieved from metadata for the media asset), or may store the selected second scene to storage 308 until the next inaudible tone is detected from the audio stream.

In some embodiments, control circuitry may pause playback of the first scene at the first point in time. For example, if the first media asset is a scheduled asset, control circuitry may store the video of the first media asset in storage 308. For example, if the first media asset is an unscheduled asset (e.g., stored in storage 308 or received on-demand from a server), control circuitry may pause retrieval of the media asset from storage 308, or from a server.

At step 840, control circuitry 304 replaces a first scene with a second scene on a display screen based on determining that the first point in time corresponds to the start time of the second scene. For example, control circuitry may change to a different source (e.g., channel) on which the selected second scene is generated for display. For example, if the transition point from the audio cue from the first media asset is not matched with the starttime of the second scene, control circuitry may delay replacement of the first media asset until the next transition point (e.g., from a tag, audio cue, etc.) and store the selected second scene. At the next transition point, control circuitry replaces the display of the first media asset by generating for display the stored version of the selected second scene. The process proceeds to step 850.

At step 850, control circuitry 304 determines whether a second point in time corresponds to an end time of the second scene. If the control circuitry determines that the second point in time corresponds to the end time of the second scene, the process proceeds to step 860, otherwise the process polls on step 850.

In some embodiments, control circuitry 304 may determine an end time of a second scene by determining a length of time of the second scene and initiating a countdown corresponding to the length of the time of the second scene. For example, control circuitry may determine that a scene "Final Round" for a second media asset "Miss USA" is ten minutes long based on received metadata for the second media asset. Control circuitry 304 may initiate a countdown corresponding to 10 minutes when control circuitry replaces the display of the first media asset with a display of the second scene at the start time of the second scene (e.g., at point 540 in FIG. 5). Upon expiration of the countdown, control circuitry 304 may replace the display of the second scene with the first media asset (e.g., at point 550 in FIG. 5).

At step 860, control circuitry 304 replaces a second scene with a first media asset on the display screen. In some embodiments, the control circuitry replaces the second scene with a first media asset on the same display. In some embodiments, for example in reference to FIG. 7 above, the control circuitry replaces the second scene with the first media asset by switching back to a first tab (e.g., first tab 770), in which the first media asset was generated for display, from a second tab (e.g., second tab 780), in which the second media asset was generated for display.

In some embodiments, control circuitry may resume playback of the first scene at the first point in time. For example, if the first media asset is a scheduled asset, control circuitry may retrieve the video of the first media asset from storage 308. For example, if the first media asset is an unscheduled asset (e.g., stored in storage 308 or received on-demand from a server), control circuitry may retrieve the media asset from storage 308, or from a server.

It is contemplated that the steps or descriptions of FIG. 8 may be used with any other embodiment of this disclosure. In addition, the steps and descriptions described in relation to FIG. 8 may be done in alternative orders or in parallel to further the purposes of this disclosure. For example, each of these steps may be performed in any order or in parallel or substantially simultaneously to reduce lag or increase the speed of the system or method. Furthermore, it should be noted that any of the devices or equipment discussed in relation to FIGS. 3-4 could be used to perform one or more of the steps in FIG. 10.

It will be apparent to those of ordinary skill in the art that methods involved in the present invention may be embodied in a computer program product that includes a computer-usable and/or readable medium. For example, such a computer-usable medium may consist of a read-only memory device, such as a CD-ROM disk or conventional ROM devices, or a random access memory, such as a hard drive device or a computer diskette, having a computer-readable program code stored thereon. It should also be understood that methods, techniques, and processes involved in the present invention may be executed using processing circuitry. For instance, determination of media asset ranking may be performed by processing circuitry, e.g., by processing circuitry 306 of FIG. 3. The processing circuitry, for instance, may be a general purpose processor, a customized integrated circuit (e.g., an ASIC), or a field-programmable gate array (FPGA) within user equipment 300, media content source 416, or media guidance data source 418. For example, the media asset attributes as described herein may be stored in, and retrieved from, storage 308 of FIG. 3, or media guidance data source 418 of FIG. 4. Furthermore, processing circuitry, or a computer program, may update settings associated with a user, such as user profile preferences, updating the information stored within storage 308 of FIG. 3 or media guidance data source 418 of FIG. 4.

The processes discussed above are intended to be illustrative and not limiting. One skilled in the art would appreciate that the steps of the processes discussed herein may be omitted, modified, combined, and/or rearranged, and any additional steps may be performed without departing from the scope of the invention. More generally, the above disclosure is meant to be exemplary and not limiting. Only the claims that follow are meant to set bounds as to what the present invention includes. Furthermore, it should be noted that the features and limitations described in any one embodiment may be applied to any other embodiment herein, and flowcharts or examples relating to one embodiment may be combined with any other embodiment in a suitable manner, done in different orders, or done in parallel. In addition, the systems and methods described herein may be performed in real time. It should also be noted, the systems and/or methods described above may be applied to, or used in accordance with, other systems and/or methods.

## Claims

1. A system for generating for display portions of scheduled media assets, comprising:
means for generating for display, on a display screen, a first scene of a first scheduled media asset;
means for receiving a request to access a second scene of a second scheduled media asset, based on a user selection of the second scene from a list of scenes;
means for, without receiving further user inputs:
determining a first audio cue in the first scheduled media asset that corresponds to a first point in time;
determining that the first point in time corresponds to a start time of the second scene while the first scheduled media asset is generated for display, wherein the means for determining that the first point in time corresponds to the start time is configured to determine that the first point in time corresponds to the start time based on a current audio cue in the first scheduled media asset which corresponds to the first audio cue;
replacing the first scene with the second scene on the display screen based on determining that the first point in time corresponds to the start time and the first audio cue;
determining that a second point in time corresponds to an end time of the second scene while the second scene is generated for display; and
replacing the second scene with the first scheduled media asset on the display screen based on determining that the second point in time corresponds to the end time.

2. The system of claim 1, further comprising:
means for determining a length of time of the second scene; and
means for initiating a countdown corresponding to the length of time based on replacing the first scene with the second scene on the display screen;
wherein the means for determining that the second point in time corresponds to the end time is configured to determine that the second point in time corresponds to the end time based on the countdown expiring.

3. The system of claim 1 or 2, wherein:
the system comprises means for pausing playback of the first scene at the first point in time and means for resuming playback of the first scene at the second point in time; and/or
the system is configured to generate for display the first scene in a first Internet browser tab and to generate for display the second scene in a second Internet browser tab.

4. A method for generating for display portions of scheduled media assets, comprising:
generating for display, on a display screen, a first scene of a first scheduled media asset;
receiving a request to access a second scene of a second scheduled media asset, based on a user selection of the second scene from a list of scenes; and
without receiving further user inputs:
determining a first audio cue in the first scheduled media asset that corresponds to a first point in time;
determining that the first point in time corresponds to a start time of the second scene while the first scheduled media asset is generated for display, the determining based on a current audio cue in the first scheduled media asset which corresponds to the first audio cue;
replacing the first scene with the second scene on the display screen based on the determining that the first point in time corresponds to the start time and the first audio cue;
determining that a second point in time corresponds to an end time of the second scene while the second scene is generated for display; and
replacing the second scene with the first scheduled media asset on the display screen based on determining that the second point in time corresponds to the end time.

5. The method of claim 4, further comprising:
determining a length of time of the second scene; and
initiating a countdown corresponding to the length of time based on replacing the first scene with the second scene on the display screen;
wherein said determining that the second point in time corresponds to the end time is based on the countdown expiring.

6. The method of claim 4 or 5, wherein:
the method further comprises pausing playback of the first scene at the first point in time and resuming playback of the first scene at the second point in time; and/or
the first scene is generated for display in a first Internet browser tab and the second scene is generated for display in a second Internet browser tab.

7. A computer program comprising computer readable instructions that, when executed by one or more processors, causes said one or more processors to perform a method according to claim 4, 5, or 6.

## Patentansprüche

1. System zum Erzeugen von Anzeigeteilen von geplanten Media Assets, umfassend:
Mittel zum Erzeugen einer ersten Szene eines ersten geplanten Media Assets zur Anzeige auf einem Anzeigebildschirm;
Mittel zum Empfangen einer Anforderung zum Zugreifen auf eine zweite Szene eines zweiten geplanten Media Assets, basierend auf einer Benutzerauswahl der zweiten Szene aus einer Liste von Szenen;
Mittel für Folgendes, ohne weitere Benutzereingaben zu empfangen:
Bestimmen eines ersten Audiohinweiszeichens in dem ersten geplanten Media Asset, das einem ersten Zeitpunkt entspricht;
Bestimmen, dass der erste Zeitpunkt einer Startzeit der zweiten Szene entspricht, während das erste geplante Media Asset zur Anzeige erzeugt wird, wobei das Mittel zum Bestimmen, dass der erste Zeitpunkt der Startzeit entspricht, konfiguriert ist, um basierend auf einem aktuellen Audiohinweiszeichen in dem ersten geplanten Media Asset, das dem ersten Audiohinweiszeichen entspricht, zu bestimmen, dass der erste Zeitpunkt der Startzeit entspricht;
Ersetzen der ersten Szene durch die zweite Szene auf dem Anzeigebildschirm basierend auf Bestimmen, dass der erste Zeitpunkt der Startzeit und dem ersten Audiohinweiszeichen entspricht;
Bestimmen, dass ein zweiter Zeitpunkt einer Endzeit der zweiten Szene entspricht, während die zweite Szene zur Anzeige erzeugt wird; und
Ersetzen der zweiten Szene durch das erste geplante Media Asset auf dem Anzeigebildschirm basierend auf dem Bestimmen, dass der zweite Zeitpunkt der Endzeit entspricht.

2. System nach Anspruch 1, ferner umfassend:
Mittel zum Bestimmen einer Zeitlänge der zweiten Szene; und
Mittel zum Initiieren eines Countdowns entsprechend der Zeitlänge basierend auf dem Ersetzen der ersten Szene durch die zweite Szene auf dem Anzeigebildschirm;
wobei das Mittel zum Bestimmen, dass der zweite Zeitpunkt der Endzeit entspricht, konfiguriert ist, um basierend auf dem Ablaufen des Countdowns zu bestimmen, dass der zweite Zeitpunkt der Endzeit entspricht.

3. System nach Anspruch 1 oder 2, wobei:
das System Mittel zum Anhalten der Wiedergabe der ersten Szene zu dem ersten Zeitpunkt und Mittel zum Fortsetzen der Wiedergabe der ersten Szene zu dem zweiten Zeitpunkt umfasst; und/oder
das System konfiguriert ist, um die erste Szene zur Anzeige in einem ersten Internetbrowser-Tab zu erzeugen und um die zweite Szene zur Anzeige in einem zweiten Internetbrowser-Tab zu erzeugen.

4. Verfahren zum Erzeugen von Anzeigeteilen von geplanten Media Assets, umfassend:
Erzeugen einer ersten Szene eines ersten geplanten Media Assets zur Anzeige auf einem Anzeigebildschirm;
Empfangen einer Anforderung zum Zugreifen auf eine zweite Szene eines zweiten geplanten Media Assets, basierend auf einer Benutzerauswahl der zweiten Szene aus einer Liste von Szenen; und
ohne weitere Benutzereingaben zu empfangen:
Bestimmen eines ersten Audiohinweiszeichens in dem ersten geplanten Media Asset, das einem ersten Zeitpunkt entspricht;
Bestimmen, dass der erste Zeitpunkt einer Startzeit der zweiten Szene entspricht, während das erste geplante Media Asset zur Anzeige erzeugt wird, wobei das Bestimmen auf einem aktuellen Audiohinweiszeichen in dem ersten geplanten Media Asset basiert, das dem ersten Audiohinweiszeichen entspricht;
Ersetzen der ersten Szene durch die zweite Szene auf dem Anzeigebildschirm basierend auf dem Bestimmen, dass der erste Zeitpunkt der Startzeit und dem ersten Audiohinweiszeichen entspricht;
Bestimmen, dass ein zweiter Zeitpunkt einer Endzeit der zweiten Szene entspricht, während die zweite Szene zur Anzeige erzeugt wird; und
Ersetzen der zweiten Szene durch das erste geplante Media Asset auf dem Anzeigebildschirm basierend auf dem Bestimmen, dass der zweite Zeitpunkt der Endzeit entspricht.

5. Verfahren nach Anspruch 4, ferner umfassend:
Bestimmen einer Zeitlänge der zweiten Szene; und
Initiieren eines Countdowns entsprechend der Zeitlänge basierend auf dem Ersetzen der ersten Szene durch die zweite Szene auf dem Anzeigebildschirm;
wobei das Bestimmen, dass der zweite Zeitpunkt der Endzeit entspricht, auf dem Ablaufen des Countdowns basiert.

6. Verfahren nach Anspruch 4 oder 5, wobei:
das Verfahren ferner Anhalten der Wiedergabe der ersten Szene zu dem ersten Zeitpunkt und Fortsetzen der Wiedergabe der ersten Szene zu dem zweiten Zeitpunkt umfasst; und/oder
die erste Szene zur Anzeige in einem ersten Internetbrowser-Tab erzeugt wird und die zweite Szene zur Anzeige in einem zweiten Internetbrowser-Tab erzeugt wird.

7. Computerprogramm, das computerlesbare Anweisungen umfasst, die, wenn sie durch einen oder mehrere Prozessoren ausgeführt werden, den einen oder die mehreren Prozessoren dazu veranlassen, ein Verfahren nach Anspruch 4, 5 oder 6 durchzuführen.

## Revendications

1. Système pour générer des parties d'affichage de contenu multimédia programmé, comprenant :
des moyens pour générer l'affichage, sur un écran d'affichage, d'une première scène d'un premier contenu multimédia programmé ;
des moyens pour recevoir une demande d'accès à une seconde scène d'un second contenu multimédia programmé, sur la base d'une sélection par un utilisateur de la seconde scène dans une liste de scènes ;
des moyens pour, sans recevoir d'autres entrées de l'utilisateur :
déterminer un premier signal audio dans le premier contenu multimédia programmé qui correspond à un premier instant ;
déterminer que le premier instant correspond à une heure de début de la seconde scène tandis que le premier contenu multimédia programmé est généré pour l'affichage, dans lequel les moyens pour déterminer que le premier instant correspond à l'heure de début sont configurés pour déterminer que le premier instant correspond à l'heure de début sur la base d'un signal audio actuel dans le premier contenu multimédia programmé qui correspond au premier signal audio ;
remplacer la première scène par la seconde scène sur l'écran d'affichage sur la base de la détermination que le premier instant correspond à l'heure de début et au premier signal audio ;
déterminer qu'un second instant correspond à un instant de fin de la seconde scène tandis que la seconde scène est générée pour l'affichage ; et
remplacer la seconde scène par le premier contenu multimédia programmé sur l'écran d'affichage sur la base de la détermination que le second instant correspond à l'heure de fin.

2. Système selon la revendication 1, comprenant en outre :
des moyens pour déterminer une durée de la seconde scène ; et
des moyens pour lancer un compte à rebours correspondant à la durée basée sur le remplacement de la première scène par la seconde scène sur l'écran d'affichage ;
dans lequel les moyens pour déterminer que le second instant correspond à l'heure de fin sont configurés pour déterminer que le second instant correspond à l'heure de fin sur la base de l'expiration du compte à rebours.

3. Système selon la revendication 1 ou 2, dans lequel :
le système comprend des moyens pour suspendre la lecture de la première scène au premier instant et des moyens pour reprendre la lecture de la première scène au second instant ; et/ou
le système est configuré pour générer l'affichage de la première scène dans un premier onglet de navigateur Internet et pour générer l'affichage de la seconde scène dans un second onglet de navigateur Internet.

4. Procédé pour générer l'affichage des parties de contenu multimédia programmé, comprenant :
la génération de l'affichage, sur un écran d'affichage, d'une première scène d'un premier contenu multimédia programmé ;
la réception d'une demande d'accès à une seconde scène d'un second contenu multimédia programmé, sur la base d'une sélection par l'utilisateur de la seconde scène dans une liste de scènes ; et
sans recevoir d'autres entrées de l'utilisateur :
le fait de déterminer qu'un premier signal audio dans le premier contenu multimédia programmé correspond à un premier instant ;
le fait de déterminer que le premier instant correspond à une heure de début de la seconde scène tandis que le premier contenu multimédia programmé est généré pour l'affichage, le fait de déterminer étant basé sur un signal audio actuel dans le premier contenu multimédia programmé correspond au premier signal audio ;
le remplacement de la première scène par la seconde scène sur l'écran d'affichage sur la base du fait de déterminer que le premier instant correspond à l'heure de début et au premier signal audio ;
le fait de déterminer qu'un second instant correspond à un instant de fin de la seconde scène tandis que la seconde scène est générée pour l'affichage ; et
le remplacement de la seconde scène par le premier contenu multimédia programmé sur l'écran d'affichage sur la base du fait de déterminer que le second instant correspond à l'heure de fin.

5. Procédé selon la revendication 4, comprenant en outre :
la détermination d'une durée de la seconde scène ; et
le lancement d'un compte à rebours correspondant à la durée basée sur le remplacement de la première scène par la seconde scène sur l'écran d'affichage ;
dans lequel ledit fait de déterminer que le second instant correspond à l'heure de fin est basé sur l'expiration du compte à rebours.

6. Procédé selon la revendication 4 ou 5, dans lequel :
le procédé comprend en outre la suspension de la lecture de la première scène au premier instant et la reprise de la lecture de la première scène au second instant ; et/ou
la première scène est générée pour être affichée dans un premier onglet du navigateur Internet et la seconde scène est générée pour être affichée dans un second onglet du navigateur Internet.

7. Programme informatique comprenant des instructions lisibles par ordinateur qui, lorsqu'elles sont exécutées par un ou plusieurs processeurs, amènent ledit ou lesdits processeurs à réaliser un procédé selon la revendication 4, 5 ou 6.
